(19) Europäisches Patentamt / European Patent Office / Office européen des brevets

(11) **EP 2 402 286 A2**

(12) **EUROPEAN PATENT APPLICATION**


(43) Date of publication:
**04.01.2012 Bulletin 2012/01**

(21) Application number: **10177904.9**

(22) Date of filing: **28.11.2002**

(51) Int Cl.:
***C01B 31/02*** *(2006.01)* ***D01F 9/127*** *(2006.01)*
***B01J 29/06*** *(2006.01)*

(84) Designated Contracting States:
**AT BE BG CH CY CZ DE DK EE ES FI FR GB GR IE IT LI LU MC NL PT SE SK TR**

(30) Priority: **28.11.2001 JP 2001361992**
**06.12.2001 JP 2001372718**

(62) Document number(s) of the earlier application(s) in accordance with Art. 76 EPC:
**02785971.9 / 1 462 414**



(71) Applicant: **Toray Industries, Inc.**
**Tokyo, 103-0022 (JP)**

(72) Inventors:
- **Shinohara, Hisanori**
  **Nagoya-shi Aichi 468-0007 (JP)**
- **Ozeki, Yuji**
  **Ichinomiya-shi Aichi 491-0001 (JP)**
- **Okamoto, Atsushi**
  **Ehime 791 3193 (JP)**
- **Kuroki, Motohiro**
  **Ehime 7913193 (JP)**
- **Yoshikawa, Masahito**
  **Nagoya-shi Aichi 458-0033 (JP)**

(74) Representative: **Webb, Peter Reginald et al**
**Miller Sturt Kenyon**
**9 John Street**
**London, WC1N 2ES (GB)**


Remarks:
This application was filed on 21-09-2010 as a divisional application to the application mentioned under INID code 62.

(54) **Method for manufacturing hollow nanofiber, hollow nanofiber and catalyst composition for manufacturing hollow nanofiber**


(57) A method for preparing hollow nanofibers having carbon as a primary component, which comprises contacting a carbon-containing compound with a catalyst at a temperature of 500 to 1200 ˚C, wherein as the catalyst use is made of a catalyst comprising a zeolite exhibiting the thermal resistance at 900 ˚C and, supported thereon, a metal; a catalyst comprising a metallosilicate zeolite containing a heteroatom except aluminum and silicon in the structural framework thereof and, supported thereon, a metal; a catalyst comprising a supporting material and, supported thereon, fine cobalt particles exhibiting a binding energy of a cobalt 2P3/2 electron of 779.3 to 781.0 eV, as measured by the X-ray photoelectron spectroscopy; a catalyst comprising a supporting material and, supported thereon, fine cobalt particles exhibiting a cobalt atom ratio in the surface of the supporting material of 0.1 to 1.5 %, as measured by the X-ray photoelectron spectroscopy under a condition of 10 kV and 18 mA; a catalyst comprising a supporting material and, supported thereon, fine cobalt particles exhibiting a weight ratio of cobalt to a second metal component (weight of cobalt/weight of the second metal component) of 2.5 or more; or a catalyst comprising a zeolite having a film form and, supported on the surface thereof, a metal.


Fig.4(A)

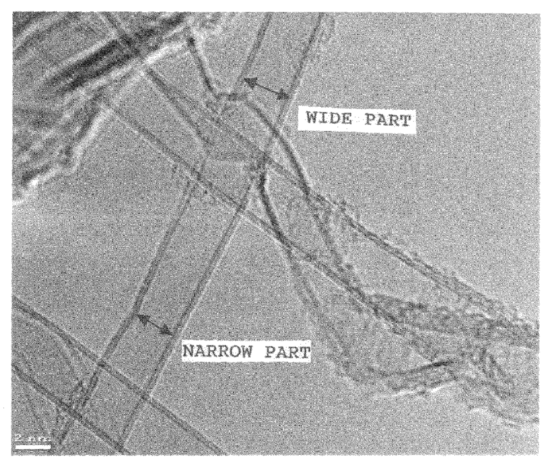


EP 2 402 286 A2

## Description

TECHNICAL FIELD

The present invention relates to a method for manufacturing hollow nanofibers, hollow nanofibers, and a catalyst composition for manufacturing hollow nanofibers. More particularly, the present invention relates to a method for manufacturing hollow nanofibers which enables acquisition of a thin and multi-walled carbon nanotube having a small number of graphite layer defects, hollow nanofibers obtained by this method, and catalyst composition for manufacturing hollow nanofibers.

BACKGROUND ART

A representative example of hollow nanofibers is carbon nanotubes. The carbon nanotubes have cylindrical shape formed by rolling one graphite sheet. A one-layer rolled tube is referred to as a single-walled carbon nanotube, and a rolled tube of two or more layers is referred to as a multi-walled carbon nanotube. Since these carbon nanotubes have high mechanical strength and high conductivity, expanded use for various purposes using properties thereof is expected. Examples are an application to an anode material of a fuel cell or a lithium secondary cell, an application to a high-strength resin material which is a composite material of a resin and an organic semiconductor, a conductive resin material, an electromagnetic wave shield material or the like. Moreover, an example is an application to an absorbent, a medical nanocapsule, an MRI contrast medium or the like since the carbon nanotube has a nanosize space. Furthermore, an example is an application to a field emission electron source, nanotweezers using nanotubes one by one, a scanning type tunneling microscope probe or the like, since the tip of the nanotube is very thin. In all of the applications, a thinner nanotube is more advantageous, and a nanotube having a smaller number of graphite layer defects is preferable.

Conventionally, as a method for manufacturing carbon nanotubes, an arc discharge method and a chemical vapor deposition method (or chemical vapor phase growth method, referred to as a CVD method hereinafter) have been known. According to the former, i.e. , the arc discharge method, carbon nanotubes are manufactured by using a carbon rod as an electrode and executing high-voltage/high-current arc discharging in vacuum or an inert gas atmosphere. The nanotube is obtained together with graphite, carbon nanoparticles or the like in a cathode deposit. According to the latter, i.e., the CVD method, carbon nanotubes are manufactured by reacting a raw material gas of benzene, toluene, orthomethyl diarylketone, acetylene, ethylene, methane or the like at several hundred ˚C under presence of metal fine particles of iron, nickel or the like.

The carbon nanotubes obtained by the aforementioned arc discharge method have a drawback that there are many impurities such as amorphous carbon though the number of graphite layer defects is small. In comparison, the carbon nanotubes obtained by the aforementioned CVD method are better than the arc discharge method in that impurities are limited, and the tube can be manufactured inexpensively. However, the carbon nanotubes manufactured by the CVD method have a problem that there are many defects on a graphite layer, and thus the graphite layer detects cannot be reduced unless heat treatment of about 2900 ˚C is carried out in a post process.

Regarding a method for solving such a problem of the CVD method, Shinohara et al., have reported that multi-walled nanotubes constituted of about ten layers and small in the number of graphite layer defects can be manufactured by using a catalyst in which cobalt and vanadium are carried on a powdered Y type zeolite (Chemical Physics Letters 303 (1999) 117-124).

However, in order to obtain thin single-walled nanotubes by the aforementioned method, reaction must be carried out at a high temperature of 800 to 900 ˚C. When the carbon nanotubes are produced at a temperature exceeding 800 ˚C, there has been a problem that a structural change occurs in a zeolite of a catalyst supporting material during reaction to cause aggregation of a metal carried on the zeolite, and consequently stable production of thin and good-quality single-walled carbon nanotubes become difficult.

Additionally, the single-walled carbon nanotubes are useful because of these thin shape, but there is a problem that durability is low due to a one-layer structure. However, multi-walled formation for durability improvement increases thickness, and thus there is a problem that the multi-walled type is inferior to the single-walled carbon nanotubes in performance.

Furthermore, J. B. Nagy et al., have reported that multi-walled nanotubes constituted of two to several tens of layers and small in the number of defects can be manufactured by using a catalyst in which cobalt and iron, cobalt and vanadium, or cobalt and molybdenum are carried on a powdered Y type zeolite or alumina (Chemical Physics Letters 317 (2000) 71-76). According to this manufacturing method, however, physical properties of the metal catalyst which governs catalyst reaction is not controlled, and consequently it is impossible to control the number of layers or a diameter of carbon nanotubes to be produced. It may be attributed to the fact that since the Y type zeolite has high hydrophilicity and many ion-exchange sites, a metal salt aqueous solution is easily adsorbed through fine pores of the zeolite while the catalyst metal is supported, the metal is preferentially introduced to ion-exchange sites in the fine pores, and consequently the amount of a metal supported on the outer surface of the zeolite which contributes to synthesis of the carbon nanotube is small.

Additionally, when the powdered zeolite is used as the supporting material of the catalyst metal, the carbon nanotube is obtained in a stuck state to the zeolite. Thus, work must be carried out to separate and remove the zeolite from the carbon nanotubes. However, as a method for separating and removing the zeolite, there are no methods other than that for dissolving out the zeolite by hydrogen fluoride or the like. Consequently, there has been a problem that the zeolite used once as a catalyst cannot be used again. Since the zeolite is an expensive material, when the zeolite can be separated and used again, it is advantageous for a reduction in manufacturing costs of the carbon nanotube.

Furthermore, when the powdered zeolite is used, the carbon nanotubes are simultaneously grown in a random direction. Consequently, there has been a problem that tubes are entangled together, and much labor is necessary to disentangle the tubes after growth. Additionally, the powdered zeolite is generally aggregated, and fine pores are present on a powder interface and a crystal interface. The fine pores of the powder and crystal interfaces are not controlled for size unlike the fine pores of the zeolite itself. Thus, there has been a problem that it becomes difficult to control a diameter or the like of the generated carbon nanotube.

## DISCLOSURE OF THE INVENTION

A first object of the present invention is to provide, concerning a manufacturing method of a CVD method which uses a zeolite as a supporting material of metal catalyst, a method for manufacturing hollow nanofibers which can manufacture carbon nanotubes thin and small in the number of defects of a graphite layer even when production reaction is executed at a high temperature.

A second object of the present invention is to provide a method for manufacturing hollow nanofibers, which can manufacture multi-walled carbon nanotubes having excellent durability with a thin thickness and having double-walled to five-walled.

A third object of the present invention is to provide a method for manufacturing hollow nanofibers, which can control a thickness and the number of layers, and obtain a carbon nanotube small in the number of defects of a graphite layer.

Furthermore, a fourth object of the present invention is to provide a method for manufacturing hollow nanofibers, which enables reuse of a zeolite as a supporting material and facilitates separation and removal of a produced carbon nanotube from the zeolite.

A method for manufacturing hollow nanofibers according to claim 1 of the present invention is designed to achieve the first object and **characterized in that** hollow nanofibers having carbon as a primary component is produced by contacting a catalyst in which a metal is carried on a zeolite having a heat resistance at 900 ˚C with a carbon-containing compound at a temperature of 500 to 1200 ˚C.

A method for manufacturing hollow nanofibers according to claim 6 of the present invention is designed to achieve the first and second objects and **characterized in that** hollow nanofibers having carbon as a primary component is produced by contacting a catalyst in which a metal is carried on a metallosilicate zeolite containing a heteroelement other than aluminum and silicon in a framework with a carbon-containing compound at a temperature of 500 to 1200 ˚C.

Thus, by contacting the catalyst, in which the metal is carried on the zeolite having the heat resistance at 900 ˚C or the metallosilicate zeolite containing the heteroelement other than the aluminum and the silicon in the framework, with the carbon-containing compound at the temperature of 500 to 1200 ˚C, it is possible to obtain a thin and good quality carbon nanotube small in the number of defects of a graphite layer and small in the amount of generated amorphous carbon. Additionally, since the carbon nanotube small in the number of defects of the graphite layer is directly produced, it is possible to eliminate heat treatment, at a temperature of 2000 ˚C or more, in which graphitization occurs in a post process. Further, it is possible to obtain a thin carbon nanotube whose outer diameter is set to 50 nm or less, and whose inner diameter is set to 0.3 nm or more and 15 nm or less.

Additionally, when the metallosilicate zeolite of claim 6 of the present invention is set as a supporting material of metal catalyst, especially in the case of a titanosilicate zeolite, it is possible to obtain a bundle of a double-walled carbon nanotubes, a double-walled carbon nanotubes which are partially three or more layered, a double-walled carbon nanotube whose inner diameter is very small, etc.

A method for manufacturing hollow nanofibers according to each of claims 8, 9 and 10 of the present invention is designed to achieve the foregoing third object. That is, the method for manufacturing hollow nanofiber according to claim 8 is **characterized in that** hollow nanofibers having carbon as a primary component is produced by contacting a catalyst, in which a supporting material carries cobalt fine particles exhibiting a binding energy of a cobalt 2P3/2 electron of 779.3 eV or more and 781.0 eV or less as measured by X-ray photoelectron spectroscopy, with a carbon-containing compound at 500 to 1200 ˚C. The method according to claim 9 of the present invention is **characterized in that** hollow nanofibers having carbon as a primary component is produced by contacting a catalyst, in which a supporting material carries cobalt fine particles exhibiting an atomic ratio of cobalt of 0.1 to 1.5% in a surface of the supporting material as

measured by X-ray photoelectron spectroscopy under a condition of 10 kV and 18 mA, with a carbon-containing compound at a temperature of 500 to 1200 ˚C. Further, the method according to claim 10 of the present invention is **characterized in that** hollow nanofibers having carbon as a primary component is produced by contacting a catalyst in which a supporting material carries cobalt fine particles exhibiting a weight ratio of cobalt to a second metal component (weight of cobalt/weight of second metal component) in a surface of the supporting material of 2.5 or more with a carbon-containing compound at a temperature of 500 to 1200 ˚C.

Thus, when the hollow nanofiber is manufactured, by controlling the electron state of the cobalt fine particles which form the catalyst, it is possible to obtain hollow nanofibers in which the number of defects of a graphite layer is small, the amount of produced amorphous carbon is small, and a thickness and the number of layers are controlled. When the supporting material is a zeolite, since the electron state of the metal catalyst is changed by the supporting material, it is possible to control physical properties of the manufactured hollow nanofibers. Additionally, according to these methods, since the carbon nanotube small in the number of defects of a graphite layer is directly produced, it is possible to eliminate heat treatment for graphitization at a temperature of 2000 ˚C or more in a post process.

Furthermore, a method for manufacturing hollow nanofibers according to claim 20 of the present invention are designed to achieve the foregoing fourth object and **characterized in that** hollow nanofibers having carbon as a primary component are produced by contacting a catalyst in which a metal is carried on a surface of a membranous zeolite with a carbon-containing compound at a temperature range of 500 to 1200 ˚C.

Thus, by using the membranous zeolite in place of a powdered zeolite, it is possible to reuse the zeolite which is a supporting material, and to facilitate separation and removal of the produced carbon nanotube from the zeolite.

Moreover, according to each of the manufacturing methods of the present invention, it is possible to obtain novel hollow nanofibers having a constitution in which two or more double-walled to five-walled carbon nanotubes form a bundle, and containing a multi-walled carbon nanotubes bundle in which a difference between maximum and minimum inner diameters is less than 1 nm when the double-walled to five-walled carbon nanotubes are measured within a length range of 30 nm.

BRIEF DESCRIPTION OF THE DRAWINGS

FIG. 1 is a TGA and DTA curve graph of silicalite-1 used as an example of a catalyst support according to the present invention;
FIG. 2 is a TGA and DTA curve graph of TS-1 used as the other example of a catalyst support according to the present invention;
FIG. 3 is an XRD pattern after burning of TS-1 at 900 ˚C which is used as the example of the catalyst support of the present invention;
FIG. 4A is a high-resolution electron micrograph illustrating double-walled carbon nanotubes obtained by the present invention;
FIG. 4B is a high-resolution electron micrograph illustrating a bundle of the double-walled carbon nanotubes;
FIG. 5 is a high-resolution electron micrograph illustrating double-walled carbon nanotubes which are obtained by the present invention and partially three or more walled;
FIG. 6 is a high-resolution electron micrograph illustrating multi-walled carbon nanotubes obtained by the present invention;
FIGS. 7A, 7B and 7C are high-resolution electron micrographs illustrating single-walled carbon nanotubes obtained by the present invention;
FIG. 8 is a TGA and DTA curve graph of a Y type zeolite;
FIG. 9 is an XRD pattern after burning of the Y type zeolite at 600 ˚C;
FIG. 10 is an XRD pattern after burning of the Y type zeolite at 900 ˚C;
FIG. 11 is a TGA and DTA curve graph of a zeolite HSZ-390 HUA (by Tosoh Corporation);
FIG. 12 is a TGA and DTA curve graph of the zeolite HSZ-390 HUA (by Tosoh Corporation) burned at 900 ˚C;
FIG. 13 is an XRD pattern of the zeolite HSZ-390 HUA (by Tosoh Corporation);
FIG. 14 is an XRD pattern of the zeolite HSZ-390 HUA (by Tosoh Corporation) burned at 900 ˚C;
FIG. 15 is a high-resolution electron micrograph illustrating double-walled carbon nanotubes obtained by the present invention;
FIG. 16 is a high-resolution electron micrograph illustrating the double-walled carbon nanotubes and multi-walled carbon nanotubes obtained by the present invention;
FIG. 17 is a high-resolution electron micrograph illustrating the double-walled carbon nanotubes obtained by the present invention;
FIG. 18 is a transmission electron micrograph of cobalt, and iron metal fine particles, which are carried on titanosilicate:

FIG. 19 is an X-ray diffraction pattern of a membranous zeolite 2;

FIG. 20 is a powder X-ray diffraction pattern of an MFI type zeolite;

FIG. 21 is Raman spectroscopy spectrum of hollow nanofibers in which the double-walled carbon nanotubes obtained by the present invention are primary component;

FIG. 22 is a high-resolution electron micrograph illustrating the double-walled carbon nanotubes which are obtained by the present invention and whose one end is an open end;

FIG. 23 is a high-resolution electron micrograph illustrating hollow nanofibers which are obtained by the present invention and constituted of many knot structures; and

FIG. 24 is Raman spectroscopy spectrum of hollow nanofibers in which the double-walled carbon nanotubes obtained by the present invention are primary component.

BEST MODES FOR CARRYING OUT THE INVENTION

In the present invention, a zeolite is made of a crystalline inorganic oxide having a fine pore diameter of a molecular size. The molecular size is within a range of sizes of molecules existing in the world, and generally means a range of about 0.2 nm to 2 nm. More specifically, it is a crystalline microporous substance made of crystalline silicate, crystalline aluminosilicate, crystalline metallosilicate, crystalline metalloaluminosilicate, crystalline aluminophosphate, crystalline metalloaluminophosphate or the like.

As kinds of zeolites, while there is no particular limitation on kinds, for example, crystalline inorganic porous substances having structures listed in Atlas of Zeolite Structure types (W. M. Meier, D. H. Olson, Ch. Baerlocher, Zeolites, 17(1/2), 1996) are available. Additionally, the zeolites of the present invention are not limited to those listed in the document, and include zeolites having novel structures synthesized one after another in recent years. Preferable structures are easily obtained FAU, MFI, MOR, BEA, LTL, LYA and FER types, but structures are not limited to these.

In the present invention of claim 1, a zeolite having a heat resistance at 900 ˚C means that when the zeolite is burned in a nitrogen or dry air atmosphere at 900 ˚C for 30 minutes, and when powder X-ray diffraction (XRD) is executed at a room temperature before/after the burning, the zeolite has a peak in which peak position and peak height ratios thereof are similar. Preferably, a zeolite which not only has a peak similar to that of the zeolite before the burning but also does not show substantial structural changes when powder X-ray diffraction is executed after heating at 900 ˚C, is used.

Thus, even if there is a crystal peak at the same peak position before/after burning, a zeolite having a wide or sharp peak, or a considerably different intensity ratio of each peak is considered to have a substantial structure change. Though there is no particular limitation, for example, if arbitrary two peaks are taken out, and peak intensity ratios are different by 3% or more, it can be assumed that a structural change has occurred. Additionally, if a half value width of a peak is changed by 5% or more, it can be assumed that a structural change has occurred.

The presence of substantial structural changes can also be determined based on an appearance of an exothermic peak from 600 to 900 ˚C when a temperature is increased by 5 ˚C/min in a nitrogen atmosphere, and differential thermal analysis (DTA) is executed up to 900 ˚C. That is, if there is no exothermic peak within the range of 600 to 900 ˚C, it can be determined that no substantial structural changes occur until 900 ˚C.

If a DTA curve is raised after 600 ˚ C and then lowered, and its peak is present before 900 ˚ C, it is said that an exothermic peak appears. If it is impossible to determine whether it is a peak, a line obtained by connecting a point at which the curve starts to rise up and a point at which the curve finishes to drop is drawn as a base line, and a longest line segment is selected among vertical lines from the baseline to intersections of the vertical line and the curve. If a length of the longest line segment is five times or more than a noise height, a peak is determined. Additionally, a temperature at the intersection point is read to set a peak of exothermic curve (see FIG. 11).

Even if there is no substantial difference between peaks of X-ray diffraction (XRD) before/after burning at 900 ˚C , presence of an exothermic peak in differential thermal analysis (DTA) while substantially no organic substances are present indicates a change of a structure from a high energy state to a low energy state. That is, if such a zeolite is used, since a catalyst itself changes in structure in the process of preparing hollow carbon nanofibers, the hollow carbon nanofibers cannot be stably obtained.

In the present invention, zeolites having high heat resistances are specifically a zeolite whose framework is substantially constituted of a quadrivalent metal (Si, Ti, Ge, Zr or the like) and oxygen (quadrivalent metal/trivalent or lower metal (atomic ratio)>200), and a zeolite containing a trivalent or lower metal in a framework (quadrivalent metal/trivalent or lower metal (atomic ratio)<200), which have heat resistances at 900 ˚C as described above. Here, a primary component of the quadrivalent metal is Si. In the case of the zeolite containing the trivalent or lower metal in the framework (quadrivalent metal/trivalent or lower metal (atomic ratio)<200), when the number of atoms other than Si atoms (heteroatoms) is smaller, a heat resistance is generally higher.

Even if the amount of a silica component is large, a heat resistance is low if there are many structural defects.

As zeolites in which structural defects are not many, a zeolite having an atomic ratio of Si/heteroatoms in the framework of 10 or more is preferable, and a zeolite of 15 or more is further preferable. The atomic ratio of Si/heteroatoms in the zeolite framework can be measured by 29Si MAS NMR. Specific examples of zeolites having heat resistances at 900 ˚C may be crystalline silicate such as silicalite-1 or silicalite-2 in which a framework composition is substantially only silica, crystalline titanosilicate such as TS-1, etc. However, the zeolites are not limited to these.

As described above, the zeolite whose framework is substantially constituted of a quadrivalent metal (Si, Ti, Ge, Zr or the like) and oxygen (quadrivalent metal/trivalent or lower metal (atomic ratio)>200) is a preferable example. A reason is as follows.

The framework of the zeolite has a silicate structure which has Si or heteroatoms of aluminum, titanium or the like (atoms other than Si) in a center of a tetrahedron, and oxygen on a vertexes of the tetrahedron. Thus, the entry of a quadrivalent metal in the center of the tetrahedron structure provides highest stability, and a heat resistance can be expected. Theoretically, therefore, a zeolite containing substantially no or a small amount of a trivalent component such as Al has a high heat resistance. As a method for preparing such zeolites, a zeolite is directly synthesized by a conventionally known hydrothermal synthesis method, or a trivalent metal is removed from a framework in a post process.

As a method for preparing a zeolite containing substantially no trivalent component such as aluminum in a post process, crystalline aluminosilicate containing aluminum is first prepared, and the aluminum is removed by Keel method (p4155, Journal of Physical Chemistry, Vol. 71, 1967) or a method by Skeel et al., (p87, Proceedings of 6-th International Zeolite Academic Conference, 1984) to form a high silica zeolite, thereby increasing a heat resistance. Normally, however, in this state, the zeolite goes through structural changes during burning. It is because an aluminum removed part becomes a structural defect. This structural defect causes structural changes during burning.

Such a zeolite can be made stable against heat by burning beforehand in a dry gas, more preferably at a reaction temperature or more. A high silica Y type zeolite which is generally well-known is a thermal resistant zeolite called USY (e.g., HSZ-390HUA made by Tosoh Corporation). A commercially available zeolite normally has an exothermic peak within a range of 600 to 900 ˚C if it is subjected to thermal analysis in a nitrogen atmosphere. However, the zeolite once burned at a reaction temperature or more can be used stably during reaction.

A reason therefor is that the aluminum removed part of the normal thermal resistant Y type zeolite is Si-OH, and condensed to become Si-O-Si if heated in a dry gas. The commercially available thermal resistant zeolite is not burned at so high a temperature, and has much Si-OH which causes condensation at 900 ˚C, and such Si-OH is changed to stable Si-O-Si if the zeolite is burned beforehand at 900 ˚C. For example, if a reaction temperature is 900 ˚C, the zeolite can be used as a supporting material of a catalyst metal after 30-minute burning at 900 ˚C. There is no limitation on burning temperatures, but preferably burning is carried out at 900 ˚C or more. Longer burning time is better.

In the case of the zeolite containing the trivalent or lower metal in the framework (quadrivalent metal/trivalent or lower metal (atomic ratio)<200) and having the heat resistance at 900 ˚C as described above, a heat resistance is higher if an atomic ratio of Si/trivalent heteroatoms in the zeolite framework is higher, and a yield of carbon nanotubes is higher if the amount of heteoatoms is larger. In the case of the trivalent metal, an atomic ratio of Si/heteroatoms is set to 10 to 150, preferably 15 to 80 in consideration of balance between a heat resistance and a yield of carbon nanotubes.

In the present invention of claim 6, for a zeolite used for a support of a metal catalyst, a metallosilicate zeolite which contains aluminum and heteoelements other than silicon in a framework can be used. In the case of the foregoing zeolite of the present invention of claim 1, attention is paid only to the heat resistance. However, a result of serious studies by the inventors shows that in addition to the heat resistance, an affinity between the catalyst metal and the support is an important factor for preparing a high-quality carbon nanotube and for controlling the number of layers and a thickness of the carbon nanotube.

The metallosilicate zeolite described herein includes a metalloalumionosilicate zeolite. There is no particular limitation on heteroatoms, but iron, cobalt, vanadium, gallium, titanium, chromium, boron, manganese, zinc etc., can be listed as examples. Two or more kinds of the heteroatom may be included. Among others, if a titanosilicate zeolite containing titanium, a borosilicate zeolite containing boron, a cobalt silicate zeolite containing cobalt, and an iron silicate zeolite containing iron are used, it is possible to obtain a highly crystalline multi-walled carbon nanotube which cannon be obtained by other CVD methods. It has conventionally been unknown that by using the metallosilicate zeolite as the supporting material of the metal catalyst, such a high-quality carbon nanotube can be obtained.

In the case of the titanosilicate zeolite, if conditions are properly selected, it is possible to obtain novel double-walled carbon nanotubes bundle (bundle, rope) or double-walled carbon nanotubes which are partially three or more layered. The double-walled carbon nanotubes bundle thus obtained can be used as an adsorbent or the like which uses a space between the double-walled carbon nanotubes. Additionally, the double-walled carbon nanotubes which are partially three or more layered can be used for a composite material since there is an advantage of such as an improvement in an affinity with a resin made by modifying a part of three or more layers. It has been unknown that the double-walled carbon nanotubes are selectively synthesized by the catalyst containing the zeolite and the metal.

It can be concluded that the fine particles of a metal can be dispersed in zeolite by using fine pores, and electronic effects with respect to the metal can be uniformly controlled by dispersing the heteroatoms of the zeolite

framework in a uniform and isolated manner, and accordingly the double-walled carbon nanotubes which has been difficult to obtain can be selectively synthesized.

In the present invention, there is no particular limitation on a kind of metallosilicate zeolite. Though a heat resistance thereof is not always necessary, a higher heat resistance is preferable. A heat resistance at a temperature equal to/higher than a reaction temperature is preferred, and a heat resistance at 900 ˚C or more is especially preferred. A definition of the heat resistance at 900 ˚C is as described above. Effects of the metallosilicate are thought to be attributed to the metal carried thereon and an electronic affinity in the vicinity of the metal.

Thus, a lower atomic ratio of Si/heteroatoms is preferable in terms of electronic effects. When heteroatoms are not quadrivalent, however, a high atomic ratio is preferable in terms of a heat resistance. Accordingly, an atomic ratio of Si/heteroatoms is set in a range of 10 to 200, preferably in a range of 15 to 100. The heteroatoms are preferably present in a framework. However, the heteroatoms may be pulled out of the framework during burning or the like. Even if the heteroatoms are pulled out of the framework, sufficient effects may conceivably be provided in terms of affinity with the metal.

There is no particular limitation on a crystal size of such a zeolite. Generally, the size is several tens nm to several tens μm. A smaller crystal size is preferable because an outer surface area is accordingly larger to enable an increase in yield of carbon nanotubes. However, an excessively small size causes active aggregation to reduce a substantial outer surface area. Thus, a crystal size is preferably set in a range of 0.1 to 10 μm.

In the present invention of claims 1 to 7, the catalyst is used in the form of a catalyst composition which carries a metal on the aforementioned thermal resistant zeolite or the metallosilicate zeolite. There is no particular limitation on a metal kind. However, metals of groups 3 to 12, especially metals of groups 5 to 11, are preferably used. Specifically, V, Mo, Fe, Co, Ni, Pd, Pt, Rh etc., are preferably used. Here, a metal is not limited to a zero-valent state. A zero-valent metal state can be assumed during reaction. However, since there are no means for checking a state during reaction, the metal may be understood in a broad meaning of a compound including a wide range of metals or a metal kind.

Only one kind of metal may be carried, or two or more kinds may be carried. However, it is preferred to carry two or more kinds. In the case of carrying two kinds of metal, a combination of Co, Ni, Pd, PT, Rh with another metal is especially preferable. A combination of Co with one or more of Fe, Ni, V, Mo, Pd is most preferable.

There is no particular limitation on a method for carrying the metal on the zeolite. For example, the zeolite is saturated in a nonaqueous solution (e. g. , ethanol solution) in which metal salts to be carried are dissolved or an aqueous solution, sufficiently dispersed and mixed, and then dried and heated in a nitrogen or hydrogen inactive gas or a mixed gas thereof at a high temperature (300 to 600 ˚C), whereby the metal can be carried on the zeolite.

For a porous substance such as a zeolite, an equilibrium adsorption method is most preferable which reduces the aqueous solution amount of metal salts as much as possible, adsorbs the aqueous solution in fine pores of the zeolite, and removes a superfluous aqueous solution by filtration or the like to dry the substance. A reason is that fine pore diameters of the zeolite are uniform, a diameter of the carried metal becomes relatively uniform when the metal is carried by the equilibrium adsorption method, and diameters of produced hollow nanofibers become uniform. Additionally, since the metal is present in the vicinity of an entrance of the zeolite fine pores, and becomes difficult to flocculate even under a high temperature, especially in the case of using the thermal resistant zeolite, the equilibrium adsorption method is an effective metal carrying method.

Alternatively, the zeolite is saturated in the aqueous solution of metal salts, the metal salts are carried by an impregnation method or an equilibrium adsorption method, dried and heated at a high temperature (300 to 600 ˚C) in a nitrogen or hydrogen inactive gas or a mixed gas thereof, whereby the metal can be carried on a crystal surface of the heat resistant zeolite. Needless to say, the metal salts are carried, burned in air to be a metal oxide, and reduced by using hydrogen, whereby the metal can be carried on the zeolite.

Otherwise, a method can be employed which synthesizes metallosilicate such as cobalt silicate or iron silicate, burns this at a high temperature, deposits cobalt or iron in -a framework thereof on the zeolite surface, and converts it into fine particles. Since the use of this method can suppress generation of metal particles having sizes of several tens nm or more, it is possible to suppress manufacturing of multi-walled carbon nanotubes of six layers or more, or hollow nanofibers whose outer diameters are 50 nm or more. For this method, not only a zeolite having one kind of heteroatom such as cobalt silicate or iron silicate in a framework thereof but also a zeolite having two kinds or more of heteroatom such as iron, cobalt or titanium in a framework thereof are suitably used.

A larger amount of carried metal increases a yield of carbon nanotubes. However, when the amount is too large, a particle diameter of the metal becomes large. Thus, a produced carbon nanotube becomes thick. A small amount of carried metal reduces a particle diameter of the carried metal. Thus, a produced carbon nanotube becomes thin. However, a yield thereof tends to be small. An optimal amount of a carried metal varies depending on a fine pore volume, an outer surface area and a carrying method of the zeolite. In the case of using metals of two kinds or more, there is no limitation on a ratio thereof.

As described above, in the present invention of claim 8, fine cobalt particles exhibiting a binding energy of a cobalt 2P3/2 electron of 779.3 eV or more to 781.0 eV or less as measured by the X-ray photoelectron spectroscopy

are used for a catalyst.

This catalyst is used in the form of a catalyst composition carried on a supporting material. As a kind of metal, cobalt (Co) must be contained. The cobalt is effective for synthesizing thin hollow nanofibers, and cobalt in a state where an electron has been supplied from the supporting material is especially preferable. As a method for determining whether an electron has been supplied or not from the supporting material, the X-ray photoelectron spectroscopy is effective. The X-ray photoelectron spectroscopy here is one kind of electron spectroscopy. The electron spectroscopy is a method for applying an electromagnetic wave such as a light or an X-ray, charged particles such as electrons or ions, or excited electrons to a substance, and measuring a motion amount distribution or an energy distribution of generated electrons to measure a physical state of the substance. Among photoelectron spectroscopic methods using lights as incident rays, especially X-ray photoelectron spectroscopy by X-ray irradiation (XPS, ESCA) is effective for the present purpose.

A method for measuring a cobalt electron state is shown as follows. Cobalt is carried on the supporting material, burned in an argon gas at 900 °C for 30 minutes, and then cooled to a room temperature in the argon gas. Subsequently, the cobalt is exposed to atmosphere, and measured by the X-ray photoelectron spectroscopy. According to this method, since the catalyst is cooled and then exposed to air, the catalyst metal of fine particles is oxidized to be different from a real catalyst state during reaction. However, transfer of electrons from the supporting material to the metal is appraisable. A sample is placed in ultrahigh vacuum, a surface of the sample is irradiated with a convergent soft X-ray (150 to 1000 μm), and photoelectrons emitted from the vicinity (to several nm) of the surface of the sample are detected by an analyzer. The kind of an element present on the surface of the sample is identified from a binding energy value of a bound electron, and a valence and a bound state are measured from energy shift of a peak. Presumably, a larger binding energy of an electron draws electrons to the supporting material from the cobalt and, conversely, a smaller binding energy of an electron supplies electrons from the supporting material to the cobalt. By controlling the binding energy of an electron around the cobalt, it is possible to control physical properties of a produced nanofiber.

A catalyst which contains the cobalt exhibiting the binding energy of a cobalt 2P3/2 electron of 779.3 eV or more and 781.0 eV or less as measured by the aforementioned method is preferable for manufacturing a thin hollow nanofiber, especially a carbon nanotube of a small diameter and a single-walled or two to five layers. More preferably, the binding energy is 779.5 eV or more and 781.0 eV or less. When a binding energy of a cobalt 2P3/2 electron is over 781.0 eV or less than 779.3 eV, a yield of hollow nanofibers or physical properties of a product are considerably reduced, which is not preferable.

Though there is no particular limitation on a method for carrying a metal containing cobalt on a supporting material, the aforementioned impregnation method, or equilibrium adsorption method is suitably used.

There is no particular limitation on cobalt raw materials used here. However, because of easy manufacturing and a price of the metal salt solution used in the foregoing method, a mineral salt such as cobalt nitrate, cobalt acetate or cobalt sulfate, a cobalt complex of ethylenediaminetetraacetic acid, a complex salt such as a cobalt acetylacetonate complex analogous represented by the following formula (1) (in the formula (1), R contains at least one selected from a methyl group, an ethyl group, an n-propyl group, an i-propyl group, an n-butyl group, an i-butyl group, a t-butyl group, and a phenyl group), a halide such as cobalt chloride, cobalt bromide, or cobalt fluoride, and an organic acid such as cobalt oxalate or cobalt stearic acid are preferably used.

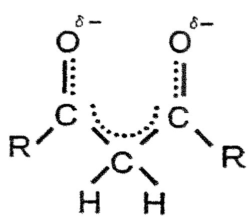

· · · (1)

It is necessary that the cobalt supporting material be capable of carrying cobalt metal fine particles in a highly dispersion state and supplying electrons to the cobalt metal fine particles as described above. As long as the supporting material satisfies such conditions, there is no limitation. However, an inorganic oxide, a zeolite, silicon, graphite, a carbon nanotube or the like is preferred. Especially, when electron absorbance of the supporting material is high, electrons move from the catalyst metal to the supporting material. Thus, an electron density on the catalyst metal is reduced. As a result, a binding energy of an electron on the cobalt becomes higher. Conversely, when electron donating property of the supporting material is high, electrons move from the supporting material to the catalyst metal. Thus, an electron density thereon is increased. As a result, a binding energy of an electron on the cobalt becomes low. Accordingly, a supporting material having proper electron absorbance/donating property is preferable, especially a zeolite is preferable. In the case of using a zeolite for the supporting material, a zeolite having a low polarity such as a USY type or titanosilicate is more preferable than a zeolite having a small silica-alumina ratio and a high polarity such as an Na-Y type.

A catalyst according to claim 9 of the present invention is **characterized in that** an atomic ratio of cobalt on a supporting material surface is 0.1 to 1.5% when measured under a condition of 10 kV and 187 mA by the X-ray photoelectron spectroscopy.

Regarding measurement of an atomic ratio of cobalt on the supporting material surface, a manufacturing method and a measurement method of a sample are similar to those of the aforementioned electron state. It is possible to quantify an element in the vicinity of the sample surface by using a peak area obtained as a result of the measurement. In this case, information obtained from the vicinity of the sample surface varies depending on an X-ray output, and the internal information of the sample cannot be ignored as an output is higher. Thus, according to the present invention, when an atomic ratio of cobalt on the supporting material surface is 0.1 to 1.5% when the sample is measured under the measurement conditions, particularly high-quality hollow nanofibers can be obtained. When an atomic ratio of cobalt is less than 0.1%, the amount of a catalyst metal is too small. Thus, a yield of hollow nanofibers is reduced. On the other hand, when an atomic ratio of cobalt is over 1.5%, aggregation of cobalt particles progresses as described later. Additionally, because of too much cobalt, electron contribution from the cobalt to each cobalt atom is reduced. Thus, it becomes difficult to control physical properties of a produced hollow nanofiber.

Furthermore, the present invention relates to a method for manufacturing hollow nanofibers, which are **characterized in that** hollow nanofibers having carbon as a primary component is produced by using a catalyst which carries, on a titanium-containing supporting material, fine cobalt particles exhibiting an atomic ratio of cobalt of 0.3 or more and 2.0 or less in a surface of the supporting material as measured by X-ray photoelectron spectroscopy under a condition of 10 kV and 18 mA, and contacting the catalyst with a carbon-containing compound at 500 to 1200 ˚C.

In this method, the following two requirements are important.

(1) The supporting material contains titanium.
(2) An atomic ratio of cobalt to titanium in the supporting material surface is 0.3 or more and 2.0 or less as measured by the X-ray photoelectron spectroscopy under the condition of 10 kV and 18 mA.

As a titanium containing supporting material, metallic titanium, titanium oxide, titanate, a mixture of titanium oxide with the other oxide, a composite oxide containing titanium, a zeolite containing titanium in a framework thereof, etc., are listed. Excessively high concentration of titanium in the supporting material is not preferably in order to set an atomic ratio of cobalt to titanium in the surface of supporting material to be 0.3 or more and 2.0 or less as measured by the X-ray photoelectron spectroscopy under the condition of 10 kV and 18 mA. From this standpoint, the mixture of titanium oxide with the other oxide, the composite oxide containing titanium, or the zeolite containing titanium in the framework thereof is preferably used. Here, since the cobalt is used as a catalyst for manufacturing hollow nanofibers, an excessively low atomic ratio reduces a yield of hollow nanofibers. An excessively low atomic ratio is therefore not preferable. Moreover, the titanium works as a promoter for cobalt. Consequently, when an atomic ratio of titanium becomes excessively high, a catalytic activity of the titanium becomes extremely strong, which is not preferable. Thus, preferably, the atomic ratio of cobalt to titanium is set in the range of 0.3 or more and 2.0 or less, more preferably in the range of 0.5 or more and 1.5 or less.

Additionally, a catalyst according to the present invention of claim 10 is characterized by containing cobalt and metals of groups 3 to 12 as second metal components. The metals which become second metal components here mean metals of groups 3 to 12 of largest abundance ratios other than a supporting material and cobalt as a result of element analysis in a supporting material surface by ESCA or the like. Especially, for the purpose of controlling physical properties of a produced hollow nanofiber, metal kinds other than cobalt and the second metal components may be present as metal kinds on the supporting material surface. The metal of the second metal component conceivably functions as a promoter for cobalt or has a function of forming an alloy with the cobalt to control particle diameters and an electronic state of the metal catalyst.

There is no particular limitation on the second metal components as long as they are metals of groups 3 to 12. However, vanadium, molybdenum, manganese, iron, nickel, and palladium are especially preferable. A weight ratio of the cobalt to the second metal component in the supporting material surface (weight of cobalt/weight of second metal component) is set to 2.5 or more. It is because control of physical properties of the hollow nanofiber is easier when the cobalt functions as a synthetic catalyst of the hollow nanofiber.

Catalyst reaction caused by the cobalt becomes more predominant as a (cobalt)/(second metal component) ratio is higher, which enables synthesis of a high-performance hollow nanofiber. Thus, a larger (cobalt)/(second metal component) ratio is better, and a weight ratio is set to 2.5 or more, preferably 3.0 or more, and more preferably 5.0 or more. Effects are particularly high when the ratio is 5.0 or more, and manufacturing of a nanofibers of 20 nm or more in diameter is extremely suppressed. This is particularly conspicuous when metalosilicate is used for a supporting material. Incidentally, the weight ratio in the supporting material surface can be measured by using the X-ray photoelectron spectroscopy which defines an X-ray output as 10 kV and 18 mA.

For fine particles of the metal catalyst of the present invention of each of claims 8, 9 and 10, preferably, 80%

or more of the total number thereof has a size of 0.5 to 10 nm. This is because diameters of fine particles of the metal catalyst affect a diameter of a manufactured hollow nanofiber and thus, in the case of manufacturing a thin hollow nanofiber, smaller particle diameters are better.

For the supporting material of the metal catalyst of the present invention of each of claims 9 and 10, an inorganic oxide, a zeolite, silicon, graphite, a carbon nanotube or the like is preferable. Especially, the zeolite is preferable because cobalt metal fine particles can be supported in a highly dispersed state, and electrons can be supplied to the cobalt metal fine particles as described above. Moreover, as a zeolite structure, easily obtained FAU, MFI, MOR, BEA, LTL, LTA, and FER types are preferable. Additionally, a metallosilicate zeolite containing a heteroelement other than silicon in a framework is preferable.

A manufacturing method of the present invention of claim 20 is **characterized in that** a powdered zeolite is formed into a film shape, and metal is supported on a surface of the membranous zeolite.

The membranous zeolite is prepared by continuously coating a zeolite crystal. Coating is normally applied on a support because a sufficiently strong membranous substance cannot be usually obtained only by the zeolite. The support is for reinforcing the membranous zeolite, and it only needs to have strength not to be destroyed by touching. There is no particular limitation on a shape of the support, and any one of fiber, particle, flat plate, tube, honeycomb, and monolith shapes can be selected. Preferably, the membranous zeolite has thin coating on the support. A direction parallel to the support is continuously covered with the zeolites, and smaller spaces therebetween are better. A thinner shape is preferable in a direction perpendicular to the support. A thinner shape is preferable because use efficiency of the zeolite is increased. Preferably, a thickness is set to 10 $\mu$m or less, more preferably 5 $\mu$m or less, particularly preferably 1 $\mu$m or less.

A stronger membranous zeolite is better because it is reused. In order to increase the strength of the membranous zeolite, a support having a high affinity with the zeolite is preferably used. Since the zeolite itself is a metallic oxide, and the metallic oxide has a particularly high affinity, a support containing metallic oxide as a primary component is preferably used. The metallic oxide is, e.g., aluminum oxide, silicon oxide, titanium oxide, zirconium oxide or the like, and a composite oxide such as mullite, cordierite, or silica alumina.

There is no particular limitation on a method for preparing a membranous zeolite. For example, a zeolite can be coated into a uniform film shape by contacting alkaline slurry containing a zeolite crystal, sol or a solution with the surface of the support. Further, in order to increase the strength of the membranous zeolite, a substance in which a zeolite is previously coated into a film shape is treated by water vapor after application of a zeolite precursor liquid thereon. Alternatively, a substance in which a zeolite is previously coated into a film shape is dipped in a zeolite precursor liquid, and subjected to hydrothermal treatment. Thus, crystals of coated zeolite particles grow mutually to become dense, thereby increasing the strength.

In the case of an oriented crystal surface of the membranous zeolite, produced carbon nanotubes are also oriented to be homogenous without entanglement. The orientation of the crystal surface means that compared with the X-ray diffraction pattern of the powdered zeolite, peak intensity ratios are different while peak positions are similar. When arbitrary two peaks are chosen and a peak intensity ratio thereof is different by 20% or more from that of the powdered zeolite, it is defined to be oriented.

Metal is used as a catalyst, and supported on the crystal surface of the membranous zeolite. Although, there is no particular limitation on metal kinds, metals of 3 to 12 groups, preferably metals of 5 to 11 groups, are used. Among them, V, Mo, Fe, Co, Ni or the like is particularly preferable. One kind of a metal, or two or more kinds of metals may be supported. Preferably, two or more kinds are supported.

There is no particular limitation on a method for allowing metal to be supported on the crystal surface of the membranous zeolite. For example, the membranous zeolite is dipped in a nonaqueous solution (e.g., ethanol solution) in which metal salt to be supported is dissolved, dried after sufficient dispersion and mixing, and further heated in an inert gas at a high temperature of 300 to 600 ˚C, whereby the metal can be supported on the crystal surface of the membranous zeolite. Alternatively, a zeolite film is dipped in an aqueous solution of metal salts, burned in air to be formed into a metal oxide after drying, and then it is reduced by using hydrogen, whereby the metal can be supported on the crystal surface of the membranous zeolite. Otherwise, the metal can be supported by an evaporation method or a sputtering method.

In the present invention, hollow nanofibers is manufactured by contacting each of the metal catalysts of various types described above with the present inventions of claims 1, 6, 8 to 10, and 20 with a carbon containing compound described below under heating.

Although, there is no particular limitation on a carbon containing compound, hydrocarbon or carbon monoxide is preferably used. The hydrocarbon may be an aromatic group or a nonaromatic group. For the hydrocarbon of the aromatic group, for example, benzene, toluene, xylene, cumene, ethylbenzene, diethylbenzene, trimethylbenzene, naphthalene, phenanthrene, anthracene, or a mixture thereof can be used. For the hydrocarbon of the nonaroamtic group, for example, methane, ethane, propane, butane, pentane, hexane, heptane, ethylene, propylene, acetylene, or a mixture thereof, or the like can be used. The hydrocarbon may also be one containing oxygen, for example, alcohol such as

methanol, ethanol, propanol, butanol, ketone such as acetone, aldehyde such as formaldehyde or acetaldehyde, a carboxylic acid such as trioxane, dioxane, dimethylether, or diethylether, ester such as ethyl acetate, or a mixture thereof. Among them, the hydrocarbons of the non-aromatic group are a most preferable carbon source since a good-quality hollow nanofibers can be obtained.

A temperature when contacting the catalyst with the carbon containing compound is 500 to 1200 ˚C, preferably in a range of 600 ˚C to 1000 ˚C. If a temperature is lower than 500 ˚C, a yield of nanofibers becomes bad. If a temperature is higher than 1200 ˚C, there are restrictions on material of a used reactor, mutual bonding of nanofibers starts, and thus control of nanofiber shapes becomes difficult. A single-walled carbon nanotubes and thin carbon nanotubes of double-walled to five-walled can be obtained at a relatively high temperature. It is preferred that the catalyst is allowed to be in contact with the carbon containing compound at 800 ˚C or more depending on a carbon source.

There is no particular limitation on a method for contacting the catalyst with the carbon containing compound. For example, contact can be achieved by placing the catalyst in a thermal resistant reaction tube made of quartz, alumina or the like and installed in a tube furnace, and supplying a carbon containing compound gas under heating. In addition to such a method, the method for contacting the catalyst with the carbon containing compound may be a method of spraying the catalyst or a method for contacting the catalyst while agitating it. The time of contact (reaction time) varies in optimal value depending on a target carbon nanotube, a gas flow rate of hydrocarbon, or concentration of hydrocarbon. However, several minutes to several hours are general. When reaction time is shorter, although thinner carbon nanotubes can be obtained, a yield is reduced. On the other hand, when reaction time is longer, although a yield is increased, carbon nanotubes tend to be thick.

A diluent gas is also suitably used in addition to the carbon containing compound. Although there is no particular limitation on the diluent gas, a gas other than oxygen gas is preferably used. Oxygen is not normally used because of an explosion possibility. However, oxygen gas may be used in a condition outside an explosion range. Nitrogen, argon, hydrogen, helium or the like is suitably used. Such a gas has effects of controlling concentration of the carbon containing compound gas and as a carrier gas. The hydrogen is particularly preferable because of an effect of activating the catalyst metal. A gas of a large molecular weight such as Ar has a large annealing effect, and is preferable when annealing is a purpose. When concentration of vapor of the carbon containing compound in the carrier gas becomes high, a thick carbon nanotube tends to be produced while a yield is increased. Thus, 2 vol% or less of hydrocarbon concentration is preferably used. When vapor concentration becomes low, a yield is reduced while a thin carbon nanotube is produced. Thus, 0.1 vol% or more is preferably used. More preferable hydrocarbon concentration is 0.2 vol% or more and 1.5 vol% or less. Most preferable hydrocarbon concentration is 0.5 vol% or more and 1 vol% or less.

Irrespective of use or nonuse of a carrier gas, synthesis of hollow nanofiber is preferably carried out under reduced pressure conditions. Advantages of the synthesis under the reduced pressure conditions are capabilities of suppressing annealing of a hydrocarbon raw material by the carrier gas, and reducing sticking of impurities on a surface of a produced hollow nanofiber. A preferably used hydrocarbon partial pressure in the case of synthesis of the hollow nanofiber under the reduced pressure conditions is 0.76 Torr or more and 15.2 Torr or less. A more preferable partial pressure is 1.53 Torr or more and 11.4 Torr or less. A most preferable partial pressure is 3.8 Torr or more and 7.6 Torr or less.

Regarding contact time between a reactive gas and the catalyst, if the contact time is excessively long, it takes a long time to obtain a target amount of hollow nanofibers From this standpoint, a solid catalyst weight (including supporting material/source gas flow rate (including carrier gas) is set to 8.0%$10^{-3}$ (g(catalyst)·min/ml) or less, more preferably 1.0%$10^{-3}$(g(catalyst)·min/ml) or less. On the other hand, if the contact time is excessively short, the hydrocarbon raw material is discharged without being effectively used. Thus, preferably used solid catalyst (including supporting material)/source gas flow rate (including carrier gas) is 1.0%$10^{-5}$ (g(catalyst)·min/ml) or more.

Incidentally, it is difficult to obtain a double-walled to five-walled carbon nanotubes of 100% purity, and identification thereof is also difficult. Thus, it is safe to say that the double-walled to five-walled carbon nanotube is a carbon nanotube having two to five layers as primary components if 50% or more in the number of nanofibers seen in a visual field of an electronic microscope when seen through a transmission electron microscope at a magnification of 200 thousand times or more is double-walled to five-walled carbon nanotubes.

Additionally, a reactor used in the present invention is preferably a fixed bed reactor. Generally, a reactor between a gaseous reactant and a solid catalyst is largely classified into the following three: a fixed bed type, a fluidized bed type and a moving bed type. Especially, the fixed bed reactor has the following advantages:

1) A reaction yield is high.
2) Contact time between the reactive gas and the catalyst can be changed in a wide range, and control is easy.

For a method for forming a catalyst layer in the fixed bed reactor, there are a method for forming a catalyst layer by packing a reaction tube with a catalyst, a radial flow method, a parallel flow method, a monolith method, a tube wall method etc., and these methods are selectively used in accordance with a reaction mechanism. There is no particular

limitation on the methods. Among them, the method for forming a catalyst layer by packing the reaction tube with a catalyst is preferably used.

There is no particular limitation on a produced hollow nanofibers having carbon as a primary component as long as it is hollow. The hollow shape of the nanofibers can be checked through the transmission electron microscope. The hollow nanofibers obtained by the present invention can be a very thin hollow nanofibers whose outer diameters are 50 nm or less and whose inner diameters are 0.3 nm or more and 15 nm or less. Especially, it is possible to form hollow nanofibers wall with a graphite layer small in the number of defects. The graphite layer constitution small in the number of defects can be checked through a high-resolution transmission electron microscope.

An outer diameter of a fibrous material contained in the hollow nanofiber can be observed through the transmission electron microscope. An outer diameter distribution curve of the hollow nanofibers of the present invention is characterized by having one or more peaks in a diameter range of 0.4 to 10 nm. Additionally, when a diameter distribution is divided into the following four ranges, it is possible to manufacture hollow nanofibers having two or more peaks which are present in two different ranges.

1) A diameter range of 0.4 to 1 nm
2) A diameter range of 1 to 3 nm
3) A diameter range of 3 to 5 nm
4) A diameter range of 5 to 10 nm

A reason for such two peaks in the outer diameter distribution of the hollow nanofibers may be that there is a distribution of a catalyst form for producing the hollow nanofibers. Additionally, because of the mixed presence of the hollow nanofibers different in diameter, effects which use properties of each nanofiber can be expected. For example, in the case of composite use, such effects are conceivable that hollow nanofibers having a large diameter provides a strength, and hollow nanofibers having a small diameter bridges a resin and the hollow nanofiber having a large diameter in a mesh shape.

Moreover, the present invention includes hollow nanofibers which has a peak in any one of the ranges 1 to 4), and one or more peaks in a diameter range of 10 to 50 nm. In this case, hollow nanofibers of the aforementioned composition can be manufactured by mixing particularly large catalyst particles. Here, if a peak intensity in any one of the ranges 1 to 4) is (1) and a peak intensity in the diameter range of 10 to 50 nm is (2), an intensity ratio thereof is (1) /(2)=1 or more. This means that thin hollow nanofibers are manufactured more. Thus, it is supposed that high nanoscopic filler effect can be provided.

Regarding the hollow nanofiber of the diameter 10 to 50 nm, hollow nanofibers whose hollow inner diameter is 30% or less of an outer diameter can be produced. It is supposed that strength of such hollow nanofibers is very high.

Furthermore, the present invention includes hollow nanofibers which has one or more knot-shaped structures within a length 500 nm or less. Such hollow nanofibers have many concave and convex patterns on a fiber surface. Thus, when it is added to a resin, a high affinity providing effect is exhibited.

In addition, the present invention includes hollow nanofibers which has no mixtures in a hollow part of a fibrous material having an outer diameter near a peak of an outer diameter distribution curve. As substances mixed in the hollow part, amorphous carbon and a catalyst metal have conventionally been known. However, by using the manufacturing method of the present invention, it is possible to manufacture hollow nanofibers having none of such substances mixed in a hollow part. Because of no mixtures in the hollow part, a high nanoscopic filler effect can be maintained without increasing a specific gravity of the hollow nanofiber. Moreover, because of no mixtures in the hollow part, there is no influence on electric properties of the hollow nanofiber, which is preferable.

Moreover, the present invention includes hollow nanofibers in which there are no particular materials stuck on an outer surface of a fibrous material having an outer diameter near a peak of an outer diameter distribution curve. As substances stuck on the outer surface, amorphous carbon and a catalyst metal have conventionally been known. However, by using the manufacturing method of the present invention, it is possible to manufacture hollow nanofibers having none of such substances stuck to an outer surface. Because of no substances stuck on the outer surface, a high nanoscopic filler effect can be maintained without increasing a specific gravity of the hollow nanofiber. Moreover, because of no mixtures on the surface of the hollow part, there is no influence on electric properties of the hollow nanofiber, which is preferable.

The aforementioned very thin hollow nanofiber is generally defined as a carbon nanotube. Multi-walled carbon nanotubes and single-walled carbon nanotubes are both included in the hollow nanofibers having carbon as a primary component.

The hollow nanofibers obtained by the present invention have single-walled to five-walled carbon nanotubes as a primary component. By using the manufacturing method of the present invention, single-walled to five-walled carbon nanotubes can be easily obtained often in a bundle shape. In the case of selectively synthesizing a single-walled to five-layer carbon nanotube, as a zeolite supporting material, a USY type zeolite or metallosilicate such as titanosilicate and

borosilicate is preferably used.

The hollow nanofiber obtained by the present invention includes one which has double-walled to five-walled carbon nanotube as a primary component. By using the manufacturing method of the present invention, a double-walled to five-walled carbon nanotube, especially a double-walled carbon nanotube, can be easily obtained, often in a bundle shape. In the case of selectively synthesizing a double-walled to five-walled carbon nanotube, as a zeolite supporting material, titanosilicate or cobalt silicate is preferably used.

In the present invention, the bundle of the double-walled to five-walled, especially double-walled carbon nanotube means that two or more double-walled nanotubes form a bundle.

A biggest feature of the double-walled carbon nanotube bundle obtained by the manufacturing method of the present invention, or the double-walled carbon nanotube which is partially three or more layered is that no catalyst metal is stuck thereon. A content of metal is less than 1 vol%. A reason for nonsticking of metal is that a catalyst metal is fixed to a zeolite surface, a carbon nanotube is grown therefrom, and thus substantially no catalyst metal is included in the carbon nanotube. Further, a good-quality carbon nanotube uniform in thickness can be produced. According to the manufacturing method of the present invention, not only double-walled but also three to five-walled multi-walled carbon nanotubes small in diameter can be easily obtained.

Here, the uniform thickness means that when observation is made through the high-resolution transmission electron microscope, a difference between portions of a maximum and minimum inner diameter in a length range of 30 nm is less than 1 nm. It additionally means that the number of defects is small in the graphite layer. The small number of defects in the graphite layer means high strength and conductivity. If the catalyst metal is stuck, the metal must be removed. However, if acids are used to remove the metal, the surface of the nanotubes are oxidized to cause defects, which is not preferable.

According to the present invention, the carbon nanotubes can be controlled by controlling the catalyst manufacturing method of any one of claims 8, 9 and 10. The double-walled carbon nanotube obtained by the present invention is **characterized in that** an average inner diameter is larger than about 2 nm. Generally, in the case of the double-walled carbon nanotube of a large inner diameter, there is relatively much distortion, and a thickness is not often uniform. However, the double-walled to five-walled carbon nanotube produced by the manufacturing method of the present invention has properties that a thickness is uniform as described above, and not many catalyst metal particles are contained.

According to the manufacturing method of any one of claims 8, 9 and 10 of the present invention, it is possible to selectively obtain a double-walled to five-walled carbon nanotube whose inner diameter is 5 to 12 nm which is relatively large as the double-walled carbon nanotubes. It is known that various substances such as metal can be fed into a hollow part of the carbon nanotubes. In the case of the double-walled to five-walled carbon nanotubes of the large inner diameter, because of a size of its internal volume, there is a possibility that not only kinds of substances to be fed will increase in the future but also a molecule sieving effect will be provided.

Further, by selection of reaction conditions and catalyst pre-treatment conditions, it is possible to obtain a double-walled to five-walled carbon nanotube of an inner diameter of 1 nm or less which has not been obtained before. It is because metal catalyst is supported in a nested shape in fine pores intrinsic to the zeolite of 1 nm or less, and this carbon nanotube is obtained for the first time by using the zeolite as the supporting material. A two to five-layer carbon nanotube having an inner diameter of 0.4 to 1.0 nm, especially 0.6 to 0.9 nm near a fine pore entrance diameter of the zeolite is obtained. An inner diameter of the double-walled carbon nanotubes obtained by the present invention is 1 nm or less, and a length is 15 nm or more. A length is preferably 20 nm or more, more preferably 30 nm or more. According to the manufacturing method of the present invention, it is possible to obtain a bundle of thin double-walled carbon nanotubes of inner diameters 1 nm or less which have not been seen before.

The double-walled carbon nanotube which is partially three or more layered can be suitably used for a composite material since it modifies the part of three or more layers to improve affinity with a resin. Additionally, the double-walled to five-walled carbon nanotube is higher in durability than a single-walled carbon nanotubes, and thinner than a generally obtained multi-walled carbon nanotube.

The inner diameter and the length of the carbon nanotube can be estimated by the high-resolution transmission electron microscope. Although an interlayer distance of the double-walled carbon nanotube is not particularly limited, it is $0.38\pm0.20$ nm if an interlayer distance of a multi-walled carbon nanotubes of ten layers or more is assumed to be 0.34 nm to make correction, for example.

According to the present invention, it is possible to obtain hollow nanofibers having a metal content of 0.5 wt% or less and a double-walled to five-walled carbon nanotube as a primary component. By using the manufacturing method of the present invention, it is possible to manufacture hollow nanofibers containing no catalyst metal therein. A major part of the catalyst metal exists on an interface between the catalyst supporting material and the hollow nanofiber, and thus easily separated from the hollow nanofiber in a post process. There is no particular limitation on the separation method. However, for example, a method of executing treatment in a solution in which hollow nanofibers is not dissolved but the zeolite as a supporting material and the metal catalyst are dissolved is preferably used. As the solution, an

aqueous solution of a hydrofluoric acid, a sulfuric acid, a nitric acid or a hydrochloric acid is preferably used. Additionally, in order to improve effects of the post process, preferably, burning is executed in air at a temperature of about 300 to 500 ˚C beforehand or during treatment to remove amorphous carbon which covers a part around the catalyst metal.

The hollow nanofiber obtained by the present invention is **characterized in that** 50% or more of a double-walled to five-walled carbon nanotube forms no bundle, and a primary component is a double-walled to five-walled carbon nanotube. A state in which 50% or more forms no bundle means that, when observation is made by a transmission electron microscope at a magnification of 200 thousand times or more, in comparison between the number of those which form a bundle and the number of those which form no bundles among double-walled to five-walled carbon nanotubes observed in a visual field, the number of those which form no bundles is larger. It is easy to disperse generated carbon nanotubes, since bundles are difficult to be formed. Consequently, when the carbon nanotube is added to a polymer or used for a field emission display, nanoscopic filler effect and electron emission performance can be improved, which is preferable.

Furthermore, the present invention relates to hollow nanofibers containing composition which satisfies the following requirements.

(1) A double-walled carbon nanotubes are observed by a high-resolution electronic microscope.
(2) When observed by a high-resolution electronic microscope, 50% or more is a fibrous material.
(3) A total amount of a transition metal is 1 wt% or less.
(4) A peak is observed in a region of 150 to 350 $cm^{-1}$ by resonance Raman scattering measurement.

There is no particular limitation on the method for observing the double-walled carbon nanotube by the high-resolution electronic microscope. However, for example, a method is preferably used in which a sample containing hollow nanofibers is added to a highly volatile solvent such as ethanol, the hollow nanotube is dispersed in the solvent, several solvent drops containing the hollow nanofiber are dropped on a microgrid, the solvent is volatilized, and then the sample by the high-resolution electronic microscope is observed. In order to observe the double-walled carbon nanotube, a method in which a magnification is increased by 100 thousand times or more, preferably 200 thousand times or more is used. A tube in which two graphen sheets constituting a wall of a carbon nanotube are observed is a double-walled carbon nanotube. A single-walled carbon nanotube whose wall is partially double-walled is not a double-walled carbon nanotube. Unless a region in which two graphen sheets constituting a wall of a carbon nanotube are observed is continuous for at least 30 nm or more, the tube cannot be said to be a double-walled carbon nanotube. A longer region in which the two graphen sheets are observed is preferable because the tube can be said to be a homogeneous double-walled carbon nanotube.

The fact that 50% or more is a fibrous material when observation is made by the high-resolution electronic microscope means that, for example, the sample manufactured by the aforementioned method is observed by increasing a magnification by 100 thousand times, preferably 200 thousand times or more, an area of a fiber part of an observed photograph and an area of a part having another shape are obtained, and the area of the fiber part is larger. A larger amount of a fibrous material is preferable because purity of a target hollow nanofiber is increased. When the purity of the hollow nanofiber is higher, properties caused by the hollow nanofiber develop in application to a later-described purpose.

The total amount of a transition metal can be obtained by carrying out elemental analysis of the hollow nanofiber containing composition. If a total amount of a transition metal is 1 wt% or less, it is preferable because an oxidation resistance of the hollow nanofiber can be improved, and an influence by the transition metal can be reduced. Additionally, the hollow nanofiber containing composition of the present invention is **characterized in that** a peak is observed in a region of 150 to 350 $cm^{-1}$, by resonance Raman scattering measurement. The observation of the peak in the region of 150 to 350 $cm^{-1}$ by the resonance Raman scattering measurement means that a radial breathing mode (RBM) is observed. The RBM is a peak caused by stretching vibration of a thin carbon nanotube, and indicates that a carbon nanotube of a diameter 0.7 to 1.6 mm exists. By the presence of such a thin carbon nanotube, a high nanoscopic filler effect can be exhibited when the tube is used as a resin additive, and high field emission performance can be exhibited when the tube is used for a field emission display.

Furthermore, the present invention relates to hollow nanofibers containing composition which satisfies the following requirements.

(1) By resonance Raman scattering measurement, if a maximum peak intensity in a range of 1560 to 1600 $cm^{-1}$ is G, and a maximum peak intensity in a range of 1310 to 1350 $cm^{-1}$ is D, a G/D ratio is 1.5 or more and 20 or less.
(2) A double-walled carbon nanotube is observed by a high-resolution electronic microscope.

In resonance Raman scattering, a peak near 100 to 350 $cm^{-1}$ is a radial breathing mode (RBM), a structure near 1560 to 1600 $cm^{-1}$ is G-band, and as a peak caused by amorphous impurities or a defect of the hollow nanofiber,

a peak called a D-band near 1310 to 1350 $cm^{-1}$ is observed. Raman intensity reaches about 1000 times as large as that of graphite, and a resonance effect is predominant. Hollow nanofibers have different electronic structures depending on chiralities and diameters. Among these, resonance occurs when an excitation light coincides with Eg of the hollow nanofiber, and Raman spectrum appears. Thus, a spectrum changes one after another by changing an excitation light wavelength. Since the G-band of the hollow nanofiber is emphasized by a resonance effect, the intensity is greatly changed by purity of a sample. On other hand, a contribution of impurities to the broad D-band near 1330 $cm^{-1}$ is large, and the D-band is not emphasized so greatly by the resonance effect. Thus, by obtaining an intensity ratio between the G-band and the D-band, it is possible to estimate purity of the hollow nanofiber sample.

By using the manufacturing method of the present invention, it is possible to manufacture a highly pure hollow nanofiber and, as a result, a G/D ratio becomes 1. 5 or more. Additionally, a need arises to mix the hollow nanofiber in a polymer or disperse the same in a solvent when the hollow nanotube is used. In this case, if dangling bond caused by a structural defect is little on the surface of the hollow nanofiber, a problem that dispersion performance is reduced occurs. Thus, hollow nanofibers in which structural defects are present to a proper extent is preferred, and a preferred G/D ratio is 20 or less. According to the present invention, by using the aforementioned manufacturing method, it is possible to manufacture hollow nanofibers in which a G/D ratio is 1.5 or more and 20 or less.

Additionally, the hollow nanofiber containing composition of the present invention is **characterized in that** the double-walled carbon nanotube is observed by the high-resolution electronic microscope. Explanation is similar to the above.

The hollow nanofibers of the present invention are **characterized in that** at a spectrum obtained by measuring the hollow nanofiber by resonance Raman measurement method, especially when a laser wavelength is 630 to 650 $cm^{-1}$, if a maximum peak intensity in 195 to 200 $cm^{-1}$ is A, a maximum peak intensity in 217 to 222 $cm^{-1}$ is B, and a maximum peak intensity in 197 $cm^{-1}$ or less is C in a region of 350 $cm^{-1}$ or less, the following relations are satisfied.

$$A/B>1.2$$

$$A/C>2$$

A region discussed here is RBM, and relation between the frequency and hollow nanofibers diameter is detailed in a report by Kataura et al. (Eur. Phys. J.B 22, 3. (2001) pp. 307 to 320). For example, a diameter of hollow nanofibers belonging to A is about 1.25 nm, a diameter of hollow nanofibers belonging to B is about 1.10 nm, and a diameter of hollow nanofibers belonging to C is about 1.25 nm, or more. A reason why the hollow nanofiber of the present invention exhibits such RBM is unclear, but it may be attributed to a particle diameter distribution of the catalyst metal.

Additionally, the hollow nanofiber of the present invention is **characterized in that** at a spectrum obtained by measuring the hollow nanofiber by resonance Raman measurement method, especially when a laser wavelength is 630 to 650 $cm^{-1}$, if a maximum peak intensity in 195 to 200 $cm^{-1}$ is A, and a maximum peak intensity in 220 to 350 $cm^{-1}$ is D, the following relation is satisfied.

$$A/D>1.2$$

Here diameters of hollow nanofibers belonging to D is 1.1 nm or less. In the case of a double-walled carbon nanotube produced from fullerene containing carbon nanotube called peapod, a very high peak included in D appears. This is because since a second layer is formed inside the single-walled carbon nanotube, its diameter becomes very small, and a diameter distribution is apparently different from that of the present method.

Furthermore, the present invention relates to hollow nanofibers containing composition **characterized in that** by measurement of resonance Raman scattering measurement method, peaks in a range of 1500 to 1650 $cm^{-1}$ are observed in a split state. In the resonance Raman scattering measurement, the peak in the range of 1500 to 1650 $cm^{-1}$ are called G-band as described above, and are an index for indicating a degree of graphitization of a carbon material. In the case of a material in which a degree of graphitization of carbon material is particularly high, G-band may be further split to exhibits two or more because of a graphite composition. Such a carbon nanofiber has a very high degree of graphitization, and thus can become a material exhibiting high conductivity and strength.

A double-walled to five-walled carbon nanotube, in which an outermost layer of at least one end of the tube is an open end, is included in the present invention. The open end enables easy giving of a functional group, and effective for improving affinity with a polymer or the like. If the hollow nanotube is used for a field emission display, the double-walled to five-walled carbon nanotube has not only a small diameter to cause easy concentration of charges but also an open end to facilitate emission of electrons, and thus it is preferably used.

A double-walled to five-walled carbon nanotube, in which all layers of at least one end of the tube are open ends, is included in the present invention. Since all the layers of one end are open ends, a gas or the like can be adsorbed in the carbon nanotube, and thus it is effective for adsorbent use.

The present invention includes carbon nanotubes **characterized in that** all layers of both ends of the tube are open ends. Since all the layers of both ends are open ends, gas adsorption in the carbon nanotube occurs more easily, and thus it is effective for adsorbent use.

Many of such open ends are formed immediately after manufacturing. Alternatively, open ends may be formed when the hollow nanotube is cut off from the zeolite catalyst by a refining process.

In the case of producing hollow nanofibers by using a zeolite film, a length of the hollow nanofibers can be controlled by changing reaction time, and 80% or more of the produced hollow nanofiber can be within ±10% of an average length. The length of the hollow nanofibers can be observed by an electronic microscope.

A catalyst composition having a metal carried on a crystal surface of a zeolite having a heat resistance at 900 ˚C, especially a zeolite having properties of no exothermic peaks in a temperature range of 600 to 900 ˚C when heating is applied up to 900 ˚c at a temperature rising rate of 5 ˚C/min to execute thermal analysis in a nitrogen atmosphere plays an important role in manufacturing of a high-quality hollow nanofiber having carbon as a primary component. Moreover, a catalyst composition having a metal carried on a crystal surface of a metallosilicate zeolite containing a heteroelement other than aluminum and silicon in its framework plays an important role in manufacturing a high-quality hollow nanofiber having carbon as a primary component.

Furthermore, the carbon nanotube obtained by the present invention can become an effective electron emission material because of a small difference between maximum and minimum inner diameters , high degree of graphitization and little disturbance of a carbon six-membered ring arrangement. In the case of using the electron emission material containing the carbon nanotube obtained by the present invention for a field emission electron source, concentration of charges easily occurs because of a small diameter, and an applied voltage can be limited low. Moreover, compared with the single-walled carbon nanotube, durability is higher, and a life of the field emission display can be prolonged. A larger number of layers is preferable in terms of durability, and double-walled to five-walled carbon nanotube is preferable. A three-layer to five-layer carbon nanotube is most preferable because of durability and a low applied voltage.

Hereinafter, the present invention will be described by way of specific examples. However, it should be understood that the examples are only illustrative, and in no way limitative of the present invention.

Example 1

[Synthesis of thermal resistant zeolite]

Distilled water (164 g) was added to piperazinehexazhydrate (made by Aldrich) (18.9 g) and tetrapropylammonium bromide (made by Aldrich) (5.2 g), and it was agitated. The agitation was continued until dissolution while heating. Then, fumed silica (made by Aldrich) (11. 7 g) was further added, and heating was executed up to 80 ˚C to obtain a transparent aqueous solution. This was put into an autoclave of poly 4-ethylene fluoride line, and heated at 150 ˚C for five days. Subsequently, the sample was cooled, filtered, washed by water, and dried, and then calcined at 550 ˚C in air.

X-ray diffraction (XRD) of obtained powder was measured to find that the sample was silicalite-1 having an MFI type structure. These powders were heated to 900 ˚C at a temperature rising rate of 5 ˚C/min, in a gas flow of nitrogen 50 ml/min, by Shimadzu Corporation's thermal analyzer, and no exothermic peak appears in a DTA curve (FIG. 1).

[Carrying of metal salt on thermal resistant zeolite]

Ferrous acetate (made by Aldrich) (0.08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1.0 g) of the silicalite-1 were added to this suspension, and the suspension was treated by the ultrasonic cleaner for 10 minutes. Subsequently, by removing the methanol under a constant temperature of 60 ˚C, a catalyst having a metal salt carried on a crystal surface of the silicalite-1 was obtained.

[Synthesis of nanofiber (600 ˚C)]

The silicalite carrying the metal salt which was obtained in the aforementioned manner was taken out by 0.057 g, and nitrogen was supplied by 30 ml/min, to a center quartz plate of a quartz tube of an inner diameter 30 mm. The quartz tube was installed in an electric furnace, and heated to a center temperature of 600 ˚C. An ultrahigh purity

acetylene gas (made by Koatsu Gas Kogyo Co. , Ltd.) was supplied at 6 ml/min for 30 minutes, and the supplying of the acetylene gas was stopped to cool the temperature to a room temperature.

An obtained reactant was observed by a scanning electron microscope JSM-6301NF of JEOL Datum Ltd., to find almost no amorphous carbon deposition. A shape of a fibrous material was measured by a transmission electron microscope to find that a thin hollow nanofiber having an outer diameter of 30 nm or less and an inner diameter of about 5 nm was a primary component. The hollow nanofiber was observed by a high-resolution transmission electron microscope to find that a wall of the nanofiber was made of graphite layers.

[Synthesis of nanofiber (900 ˚C)]

Similarly, the silicalite-1 carrying the metal salt was taken out by 0.034 g, and nitrogen was supplied by 30 ml/min, to a center quartz plate of the quartz tube of the inner diameter 30 mm. The quartz tube was installed in the electric furnace, and heated to a center temperature of 900 ˚C. An ultrahigh purity acetylene gas (made by Koatsu Gas Kogyo Co., Ltd.) was supplied at 6 ml/min for 30 minutes, and the supplying of the acetylene gas was stopped to cool the temperature to a room temperature. A shape of a part of a reactant deposited on the quartz plate was observed by the transmission electron microscope to find a thin hollow nanofiber having an outer diameter of 30 nm or less and an inner diameter of about 5 nm. Additionally, the hollow nanofiber was observed by the high-resolution transmission electron microscope to find that a wall of the nanofiber was made of a clean graphite layer, and a single-walled carbon nanotube was seen in 8 to 20-layer carbon nanotube.

Example 2

[Heat resistance of crystalline titanosilicate]

Titanosilicate powder (TS-1; Si/Ti ratio was 50) bought from NE Chemcat Corporation was subjected to X-ray diffraction (XRD) measurement to find TS-1 having an MFI type structure. These powders were heated to 900 ˚C at a temperature rising rate of 5 ˚C/min, in a gas flow of nitrogen 50 ml/min, by Shimadzu Corporation's thermal analyzer DTG-50, and no exothermic peak appeared in a DTA curve (FIG. 2).

This zeolite was calcined at 900 ˚C for 30 minutes, and then subjected to XRD diffraction to find a residual peak of the MFI type zeolite (FIG. 3).

[Carrying of metal salt on thermal resistant zeolite]

Ferrous acetate (made by Aldrich) (0.08 g) and cobalt acetate 4 hydrate (made by Nacalai Tesque, Inc.) (0.11 g) were added to methanol (made by Nacalai Tesque, Inc . (7 ml), and suspended by an ultrasonic cleaner for 10 minutes. Powder (1.0 g) of the TS-1 was added to this suspension, and the suspension was treated by the ultrasonic cleaner for 10 minutes. Subsequently, by removing the methanol under a constant temperature of 60 ˚C, a catalyst having a metal salt carried on a crystal surface of the TS-1 was obtained.

[Synthesis of nanofiber (600 ˚C)]

The TS-1 carrying the metal salt which was obtained in the aforementioned manner was taken out by 0.050 g, and nitrogen was supplied by 30 ml/min, to a center quartz plate of a quartz tube of an inner diameter 30 mm. The quartz tube was installed in an electric furnace, and heated to a center temperature of 600 ˚C. An ultrahigh purity acetylene gas (made by Koatsu Gas Kogyo Co., Ltd.) was supplied at 6 ml/min for 30 minutes, and then the supplying of the acetylene gas was stopped to cool the temperature to a room temperature.

A reactant deposited on the quartz plate was observed by a scanning electron microscope JSM-6301NF of JEOL Datum Ltd., to find almost no amorphous carbon deposition. A shape of a fibrous material was measured by a transmission electron microscope to find that a thin hollow nanofiber having an outer diameter of 30 nm or less and an inner diameter of about 5 nm was a primary component. The hollow nanofiber was observed by a high-resolution transmission electron microscope to find that a wall of the nanofiber was made of graphite layers.

[Synthesis of nanofiber (900 ˚C.)]

Similarly, the TS-1 carrying the metal salt was taken out by 0. 034 g, and nitrogen was supplied by 30 ml/min, to a center quartz plate of the quartz tube of the inner diameter 30 mm. The quartz tube was installed in the electric furnace, and heated to a center temperature of 900 ˚C. An ultrahigh purity acetylene gas (made by Koatsu Gas Kogyo Co., Ltd.) was supplied at 6 ml/min for 30 minutes, and then the supplying of the acetylene gas was stopped to cool the

temperature to a room temperature.

A shape of a part of a reactant deposited on the quartz plate was measured by the transmission electron microscope to find a thin hollow nanofiber having an outer diameter of 30 nm or less and an inner diameter of about 5 nm. Additionally, the hollow nanofiber was observed by the high-resolution transmission electron microscope to find that a wall of the nanofiber was made of graphite layers.

[Synthesis of double-walled nanotube (900 ˚C)]

Similarly, the TS-1 carrying the metal salt was taken out by 0.09 g, and argon was supplied by 250 ml/min, to a center quartz plate of the quartz tube of the inner diameter 30 mm. The quartz tube was installed in the electric furnace, and heated to a center temperature of 900 ˚C (heat-up time of about 30 minutes). After 900 ˚C was reached, an ultrahigh purity acetylene gas (made by Koatsu Gas Kogyo Co., Ltd.) was supplied at 10 ml/min for 30 minutes, and then the supplying of the acetylene gas was stopped to cool the temperature to a room temperature.

A shape of a part of a reactant deposited on the quartz plate was measured by the high-resolution transmission electron microscope to find generation of a bundle (FIG. 4(B)) constituted of a double-walled carbon nanotube whose inner diameter was about 3 nm, double-walled carbon nanotube which does not generate bundle structure (FIG.4(A)) a double-walled carbon nanotube (FIG. 5) which was partially three or more layered, and a double-walled carbon nanotube (FIG. 22) whose one end was an open end. In the case of the double-walled carbon nanotube of FIG. 4(A), a largest inner diameter was 3.2 nm and a smallest inner diameter was 2.4 nm in a length of 30 nm. Additionally, this sample was subjected to Raman spectroscopy measurement. D-band and G-band were observed, but a radial breathing mode was not observed.

A diameter of the obtained nanofiber was observed by the transmission electron microscope, and a distribution thereof was taken to find that there was one peak (1) in a diameter of 5 to 10 nm, there was another peak (2) near a diameter of 20 nm, and a peak intensity ratio (1)/(3) thereof was about 3.

Additionally, similar reaction was made at 800 ˚C to obtain a double-walled carbon nanotube (FIG. 23) and a multi-walled carbon nanotube (FIG. 6) of many knots. A wall of the nanofiber was made of a graphite layer having a very high crystallinity.

A diameter of the obtained nanofiber was observed by the transmission electron microscope, and a distribution thereof was taken to find that there was one peak in a diameter of 0.4 to 1 nm, and there was another peak in a diameter of 5 to 10 nm.

[Refining of double-walled nanotube]

The synthesized double-walled nanotube, TS-1 and a metal catalyst mixture were added in a 5% hydrofluoric acid aqueous solution, and it was agitated hard for 3 hours. These were filtered, and washed several times by distilled water. The obtained black solid objects were dried, and subjected to element analysis by EDX. As a result, concentrations of silicon and titanium caused by the TS-1 were equal to or less than a detection limit. Next, it was burned at 300 ˚C in air for 2 hours. Then, it was agitated hard in a IN hydrochloric acid aqueous solution for 3 hours. This was filtered, and washed several times by distilled water. The obtained black solid objects were dried, and subjected to element analysis by EDX. As a result, cobalt and iron caused by the catalyst metal were 0.1 wt% and 0 wt%. Incidentally, as a result of observing the treated sample by the transmission electron microscope, a double-walled nanotube similar to that before the treatment was observed.

[Synthesis of single-walled nanotube (900 ˚C)]

Ferrous acetate (made by Aldrich) (0. 08 g) and cobalt acetate 4 hydrate (made by Nacalai Tesque, Inc.) (0.11 g) were added to water (7 ml), and suspended by an ultrasonic cleaner for 10 minutes. Powder (1. 0 g) of the TS-1 was added to this suspension, and the suspension was treated by the ultrasonic cleaner for 10 minutes. Subsequently, by removing the water under a constant temperature of 100 ˚C, a catalyst having a metal salt carried on the TS-1 powder was obtained.

Next, the TS-1 carrying the metal salt was taken out by 0.09 g, and argon was supplied by 250 ml/min, to a center quartz plate of a quartz tube of an inner diameter 100 mm. The quartz tube was installed in an electric furnace, and heated to a center temperature of 900 ˚C. An ultrahigh purity acetylene gas (made by Koatsu Gas Kogyo Co., Ltd.) was supplied at 10 ml/min for 30 minutes, and then the supplying of the acetylene gas was stopped to cool the temperature to a room temperature.

A shape of a reactant deposited on the quartz plate was measured by the high-resolution transmission electron microscope to find a bundle of single-walled nanotubes (FIGS. 7(A), 7(B) and 7(C)). An inner diameter of the single-walled nanotube was found to be about 0.6 nm through the electronic microscope.

Comparative example 1

[Heat resistance evaluation of Y type zeolite]

An Na-Y type zeolite (made by Tosoh Corporation) was heated up to 900 ˚C at a temperature rising rate of 5 ˚C/min, in a gas flow of nitrogen 50 ml/min, by Shimadzu Corporation's thermal analyzer DTG-50. As a result, an exothermic peak appeared in a DTA curve. Exothermic heat generation started at 760 ˚C, and reached its peak at 867 ˚C (FIG. 8).

This zeolite was subjected to powder X-ray diffraction measurement after burning in a nitrogen gas flow at 600 ˚C for 30 minutes (FIG. 9), and powder X-ray diffraction measurement after burning at 900 ˚C for 30 minutes (FIG. 10). In the XRD diffraction pattern of the sample burned at 900 ˚C, no zeolite peak appeared.

[Carrying of metal salt on Y type zeolite]

Ferrous acetate (made by Aldrich) (0. 08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1.0 g) of the Na-Y type zeolite (made by Tosoh Corporation) was added to this suspension, and the suspension was treated by the ultrasonic cleaner for 10 minutes. Subsequently, by removing the methanol under a constant temperature of 60 ˚C, a catalyst having a metal salt carried on the Na-Y type zeolite powder was obtained.

[Synthesis of nanofiber (600 ˚C)]

The Na-Y type zeolite powder carrying the metal salt which was obtained in the aforementioned manner were taken out by 0.029 g, and nitrogen was supplied by 30 ml/min, to a center quartz plate of a quartz tube of an inner diameter 30 mm. The quartz tube was installed in an electric furnace, and heated to a center temperature of 600 ˚C. An ultrahigh purity acetylene gas (made by Koatsu Gas Kogyo Co., Ltd.) was supplied at 6 ml/min for 30 minutes, and then the supplying of the acetylene gas was stopped to cool the temperature to a room temperature.

A shape of a reactant deposited on the quartz plate was measured by a scanning electron microscope JSM-6301NF of JEOL Datum Ltd., to find amorphous carbon deposition of about 15%. Additionally, a tube product was observed by a transmission electron microscope to find that hollow nanofibers having an outer diameter of 30 nm or less and an inner diameter of about 5 nm was obtained.

[Synthesis of nanofiber (900 ˚C.)]

Similarly, the Na-Y type zeolite powder carrying the metal salt was taken out by 0.031 g, and nitrogen was supplied by 30 ml/min, to a center quartz plate of the quartz tube of the inner diameter 30 mm. The quartz tube was installed in the electric furnace, and heated to a center temperature of 900 ˚C. An ultrahigh purity acetylene gas (made by Koatsu Gas Kogyo Co., Ltd.) was supplied at 6 ml/min for 30 minutes, and the supplying of the acetylene gas was stopped to cool the temperature to a room temperature.

A shape of a reactant deposited on the quartz plate was measured by the scanning electron microscope JSM-6301NF of JEOL Datum Ltd., to find no nanofibers.

Examples 3, 4, comparative example 2

A zeolite HSZ-390HUA (zeolite 1) of Tosoh Corporation was heated up to 900 ˚C at a temperature rising rate of 5 ˚C/min, in a gas flow of nitrogen 50 ml/min by Shimadzu Corporation's thermal analyzer DTG-50. As a result, an exothermic peak appeared in a DTA curve (FIG. 11).

This zeolite was subjected to XRD measurement after burning in dry air at 900 ˚C for 30 minutes. A structure of a Y type zeolite was held, but a peak was sharper and larger than that before the burning (XRD before burning: FIG. 13, XRD after burning: FIG. 14). A certain structural change may have occurred during heating up to 900 ˚C.

The zeolite HSZ-390HUA (zeolite 2) burned at 900 ˚C for 30 minutes, was heated up to 900 ˚C at a temperature rising rate of 5 ˚C. min, in a gas flow of nitrogen 50 ml/min by Shimadzu Corporation's thermal analyzer DTG-50. As a result, change occurred so as to prevent appearance of an exothermic peak in a DTA curve (FIG. 12).

Ferrous acetate (made by Aldrich) (0.08 g) and cobalt acetate 4 hydrate (made by Nacalai Tesque, Inc.) (0.11 g) were added to ethanol (made by Nacalai Tesque, Inc.) (7 ml), and suspended by an ultrasonic cleaner for 10 minutes. Powder (1.0 g) of the zeolites 1 and 2 were added to this suspension, and the suspension was treated by the ultrasonic cleaner for 10 minutes. Subsequently, by removing the ethanol under a constant temperature of 120 ˚C, two kinds of metal carrying catalysts 1 and 2 were obtained (catalyst 1: comparative example I, catalyst 2: example 3).

Ferrous acetate (made by Aldrich (0.16 g) and cobalt acetate 4 hydrate (made by Nacalai Tesque, Inc.) (0.22 g) were added to ethanol (made by Nacalai Tesque, Inc.) (3 ml), and treated by the ultrasonic cleaner for 10 minutes, to be dissolved. This solution was added with 1.0 g of zeolite which was burned at 500 ˚C and cooled in a decicator, shaken, and left still for 30 minutes. Subsequently, filtering was executed to take out a catalyst layer, and the catalyst layer was dried at 120 ˚C (catalyst: example 4).

[Synthesis of nanofiber (900 ˚C)]

The three kinds of catalysts 1, 2 and 3 were taken out by 0.03 g respectively, and nitrogen was supplied by 30 ml/min, to center quartz plates of three quartz tubes of inner diameters 30 mm. Each quartz tube was installed in an electric furnace, and heated to a center temperature of 900 ˚C. An ultrahigh purity acetylene gas (made by Koatsu Gas Kogyo Co., Ltd.) was supplied at 6 ml/min for 30 minutes, and then the supplying of the acetylene gas was stopped to cool the temperature to a room temperature.

Shapes of reactants deposited on the quartz plates of the three quartz tubes were measured by a scanning electron microscope JSM-6301NF of JEOL Datum Ltd., to find many nanofibrous materials in the reactants by the catalysts 2 and 3, but not many in the reactant by the catalyst 1. Additionally, a thinner nanofiber was obtained in the reactant by the catalyst 3 than in the reactant by the catalyst 2. However, the nanofiber obtained by the catalyst 1 was thicker than those by the catalysts 2 and 3.

Further, observation was made through the high-resolution transmission electron microscope to find that the numbers of defects were small in the graphite layers of the hollow nanofibers obtained by the catalysts 2 and 3, and even single-walled carbon nanotubes were seen. On the other hand, the number of defects was large in the graphite layer of the wall of the hollow nanofiber obtained by the catalyst 1. A single-walled carbon nanotube was seen, but only half or less was obtained compared with those by the catalysts 2 and 3.

[Selective synthesis of single-walled carbon nanotube]

The catalyst 2 was taken out by 0.031 g, and nitrogen was supplied by 30 ml/min, to the center quartz plate of the quartz tube of the inner diameter 30 mm. The quartz tube was installed in the electric furnace, and heated to a center temperature of 800 ˚C. Ethanol (highest grade reagent, Tokyo Kasei Co., Ltd.) was supplied at 2.1 mg/min by a microfeeder for 30 minutes, and then the supplying of the ethanol was stopped to cool the temperature to a room temperature.

A shape of a product deposited on the quartz plate of the quartz tube was measured by the scanning electron microscope JSM-6301NF of JEOL Datum Ltd., to find many extremely thin nanofibrous materials. Further, observation was made through the high-resolution transmission electron microscope to find that most of the products were single-walled carbon nanotubes.

Example 5

[Carrying of metal salt on iron silicate zeolite]

Ferrous acetate (made by Aldrich) (0. 08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1.0 g) of an MFI type iron silicate zeolite (Si/Fe=50, made by NE Chemcat Corporation) were added to this suspension, and the suspension was treated by the ultrasonic cleaner for 10 minutes. Subsequently, by removing the methanol under a constant temperature of 60 ˚C, a catalyst carrying a metal salt was obtained.

[Synthesis of nanofiber (600 ˚C)]

The iron silicate zeolite carrying the metal salt which was obtained in the aforementioned manner was taken out by 0.050 g, and nitrogen was supplied by 30 ml/min, to a center quartz plate of a quartz tube of an inner diameter 30 mm. The quartz tube was installed in an electric furnace, and heated to a center temperature of 600 ˚C. An ultrahigh purity acetylene gas (made by Koatsu Gas Kogyo Co. , Ltd. was supplied at 6 ml/min for 30 minutes, and then the supplying of the acetylene gas was stopped to cool the temperature to a room temperature.

A reactant deposited on the quartz plate was observed by a scanning electron microscope JSM-6301NF of JEOL Datum Ltd., to find almost no amorphous carbon deposition. Additionally, a shape of a fibrous material was measured by a transmission electron microscope to find that a thin hollow nanofiber having an outer diameter of 20 nm or less and an inner diameter of about 5 nm was a primary component. Observation was made through a high-resolution transmission electron microscope to find that a wall of the nanofiber was constituted of graphite layers.

Example 6

[Carrying of metal salt on Co silicate zeolite]

Ferrous acetate (made by Aldrich) (0.08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1. 0 g) of an MFI type Co silicate zeolite (Si/Co=50, made by NE Chemcat Corporation) were added to this suspension, and the suspension was treated by the ultrasonic cleaner for 10 minutes. Subsequently, by removing the methanol under a constant temperature of 60 ˚C, a catalyst carrying a metal salt was obtained.

[Synthesis of nanofiber (600 ˚C)]

The MFI type Co silicate zeolite carrying the metal salt which was obtained in the aforementioned manner was taken out by 0. 050 g, and nitrogen was supplied by 30 ml/min, to a center quartz plate of a quartz tube of an inner diameter 30 mm. The quartz tube was installed in an electric furnace, and heated to a center temperature of 600 ˚C. An ultrahigh purity acetylene gas (made by Koatsu Gas Kogyo Co., Ltd.) was supplied at 6 ml/min for 30 minutes, and then the supplying of the acetylene gas was stopped to cool the temperature to a room temperature.

A reactant deposited on the quartz plate was observed by a scanning electron microscope JSM-6301NF of JEOL Datum Ltd., to find almost no amorphous carbon deposition. Additionally, a shape of a fibrous material was measured by a transmission electron microscope to find that a thin hollow nanofiber having an outer diameter of 20 nm or less and an inner diameter of about 5 nm was a primary component. The hollow nanofiber was observed through a high-resolution transmission electron microscope to find that a wall of the nanofiber was constituted of graphite layers.

Example 7

[Carrying of metal salt on Mo silicate zeolite]

Ferrous acetate (made by Aldrich) (0.08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1.0 g) of an MFI type Mo silicate zeolite (Si/Mo=50, made by NE Chemcat Corporation) was added to this suspension, and the suspension was treated by the ultrasonic cleaner for 10 minutes. Subsequently, by removing the methanol under a constant temperature of 60 ˚C, a catalyst carrying a metal salt was obtained.

[Synthesis of nanofiber (600 ˚C)]

The MFI type Mo silicate zeolite carrying the metal salt which was obtained in the aforementioned manner was taken out by 0.050 g, and nitrogen was supplied by 30 ml/min, to a center quartz plate of a quartz tube of an inner diameter 30 mm. The quartz tube was installed in an electric furnace, and heated to a center temperature of 600 ˚C. An ultrahigh purity acetylene gas (made by Koatsu Gas Kogyo Co., Ltd.) was supplied at 6 ml/min for 30 minutes, and then the supplying of the acetylene gas was stopped to cool the temperature to a room temperature.

A reactant deposited on the quartz plate was observed by a scanning electron microscope JSM-6301NF of JEOL Datum Ltd., to find almost no amorphous carbon deposition. Additionally, a shape of a fibrous material was measured by a transmission electron microscope to find that a thin hollow nanofiber having an outer diameter of 20 nm or less and an inner diameter of about 5 nm was a primary component. The hollow nanofiber was observed through a high-resolution transmission electron microscope to find that a wall of the nanofiber was constituted of graphite layers.

Example 8

[Synthesis of thin double-walled nanotube (900 ˚C)]

The TS-1 carrying the metal salt which was prepared in the methanol solvent of the example 2 was taken out by 0.09 g, and argon was supplied by 250 ml/min, to a center quartz plate of a quartz tube of an inner diameter 100 mm. The quartz tube was installed in an electric furnace, and heated to a center temperature of 900 ˚C. A heat-up time was 90 minutes, (30 minutes, in the other examples). After 900 ˚C was reached, an ultrahigh purity acetylene gas (made by Koatsu Gas Kogyo Co., Ltd.) was supplied at 10 ml/min for 30 minutes, and then the supplying of the acetylene gas was stopped to cool the temperature to a room temperature.

A shape of a part of a reactant deposited on the quartz plate was measured by a high-resolution transmission electron microscope to find that many double-walled nanotubes of inner diameters of about 0.9 nm (FIG. 15) were

obtained. Additionally, a bundle-shaped thin carbon nanotube also was obtained. FIG. 16 shows a photo taken with a multi-walled CNT obtained at the same time. An interlayer space of the multi-walled CNT was assumed to be 0.34 nm, and correction was made with a length thereof as a reference to find that an interlayer space of the double-walled carbon nanotube was 0.38 nm, and an inner diameter was 0.99 nm. About 50% of the double-walled carbon nanotubes formed bundles, while about 50% formed no bundles.

Example 9

[Carrying of metal salt on thermal resistant zeolite]

Ferrous acetate (made by Aldrich) (0.10 g) and cobalt acetate 4 hydrate (made by Nacalai Tesque, Inc.) (0.06 g) were added to methanol (made by Nacalai Tesque, Inc.) (7 ml), and suspended by an ultrasonic cleaner for 10 minutes. Powder (1.0 g) of the TS-1 was added to this suspension, and the suspension was treated by the ultrasonic cleaner for 10 minutes. Subsequently, by removing the methanol under a constant temperature of 60 ˚C, a catalyst carrying a metal salt on a crystal surface of the TS-1 was obtained.

[Synthesis of thin double-walled carbon nanotube (850 ˚C)]

The TS-1 carrying the metal salt which was obtained in the aforementioned manner was taken out by 0.02 g, and argon was supplied by 30 ml/min, to a center quartz plate of a quartz tube of an inner diameter 30 mm. The quartz tube was installed in an electric furnace, and heated to a center temperature of 850 ˚C (heat-up time was about 30 minutes). After 850 ˚C was reached, an ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature.

A shape of a part of a reactant deposited on the quartz plate was measured by a high-resolution transmission electron microscope to find that many double-walled nanotubes of inner diameters of about 8 nm (FIG. 17) were produced. 80% or more of the double-walled carbon nanotubes formed no bundles. Additionally, adhesion of impurities to inner and outer walls of the tube was not found.

Example 10

[Synthesis of double-walled nanotube by metallosilicate]

Powder of an MFI type Co-silicate zeolite (Si/Co=25, made by NE Chemcat Corporation) was burned in an argon gas flow at 900 ˚C for 2 hours. This zeolite was taken out by 0.07 g, and argon was supplied by 250 ml/min, to a center quartz plate of a quartz tube of an inner diameter 100 mm. The quartz tube was installed in an electric furnace, and heated to a center temperature of 800 ˚C. After 800 ˚C was reached, an ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature. A shape of a part of a reactant deposited on the quartz plate was measured by a high-resolution transmission electron microscope to find that many double-walled nanotubes of inner diameters of about 3 nm were obtained. Additionally, a bundle-shaped thin carbon nanotube was obtained.

Example 11

[Carrying of metal salt on heat resistant zeolite (high flow rate)]

Ferrous acetate (made by Aldrich) (0.10 g) and cobalt acetate 4 hydrate (made by Nacalai Tesque, Inc.) (0.06 g) were added to methanol (made by Nacalai Tesque, Inc.) (7 ml), and suspended by an ultrasonic cleaner for 10 minutes. Powder (1. 0 g) of the TS-1 was added to this suspension, and the suspension was treated by the ultrasonic cleaner for 10 minutes. Subsequently, by removing the methanol under a constant temperature of 60 ˚C, a catalyst carrying a metal salt on a crystal surface of the TS-1 was obtained.

[Synthesis of double-walled nanotube (800 ˚C)]

A center of a vertical type quartz tube of an inner diameter of 30 mm was packed with quartz wool, the TS-1 carrying the metal salt which was obtained in the aforementioned manner was taken out by 1.0 g thereonto, and argon was supplied by 600 ml/min. The quartz tube was installed in an electric furnace, and heated to a center temperature of 800 ˚C (heat-up time was 30 minutes). After 800 ˚C was reached, an ultrahigh purity acetylene gas (made by Koatsu

Gas Kogyo Co., Ltd.) was supplied at 5 ml/min for 30 minutes, and then the supplying of the acetylene gas was stopped to cool the temperature to a room temperature.

A shape of a part of a reactant deposited on the quartz wool was measured by a high-resolution transmission electron microscope to find that many double-walled nanotubes of inner diameters of about 4 nm ware produced. As a result of Raman spectroscopy (FIG. 21), when a G/D ratio was 2.75, a maximum peak intensity in 195 to 200 $cm^{-1}$ was A, when a maximum peak intensity in 217 to 222 $cm^{-1}$ was B, when a maximum peak intensity in 197 $cm^{-1}$ or less was C, and when a maximum peak intensity in 220 to 350 $cm^{-1}$ was D, A/B=2.0, A/C=20, and A/D=4.0 were established.

Example 12

(Co+Fe)/silicalite

[Synthesis of silicalite]

Distilled water (164 g) was added to piperazinehexazhydrate (made by Aldrich) (18.9 g) and tetrapropylammonium bromide (made by Aldrich) (5.2 g), and it was agitated. The agitation was continued until dissolution while heating. Then, fumed silica (made by Aldrich) (11.7 g) was further added, and heating was executed up to 80 ˚C to obtain a transparent aqueous solution. This was put into an autoclave of poly 4-ethylene fluoride line, and heated at 150 ˚Cfor five days. Subsequently, the sample was cooled, filtered, washed by water, and dried, and then burned at 550 ˚C in air.

X-ray diffraction (XRD) of obtained powder was measured to find that the sample was silicalite-1 having an MFI type structure.

[Carrying of metal salt on silicalite]

Ferrous acetate (made by Aldrich) (0.08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1.0 g) of the silicalzte-1 was added to this suspension, and the suspension was treated by the ultrasonic cleaner for 10 minutes. Subsequently, by removing the methanol under a constant temperature of 60 ˚C, a catalyst having a metal salt carried on a crystal surface of the silicalite-1 was obtained.

[Photoelectron spectroscopic measurement of catalyst]

The catalyst having the metal salt carried on the silicalite-1 was burned in an argon gas at 800 ˚C for 30 minutes, and cooled to a room temperature in the argon gas. Then, the catalyst was taken out in air, and measured by an X-ray photoelectron spectrometer (10 kV, 18 mA). A measured binding energy of a cobalt 2P3 / 2 electron was 780.3 eV. A binding energy of an Fe 2P2 / 3 electron was 710.6 eV. Additionally, in a surface of a supporting material, an atomic ratio of cobalt was 0.7%, and an atomic ratio of iron was 0.3%.

[Synthesis of nanofiber (800 ˚C)]

The silicalite-1 carrying the metal salt was taken out by 0.034 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and the supplying of the acetylene gas was stopped to cool the temperature to a room temperature.

A shape of a part of a reactant deposited on the quartz plate was measured by a transmission electron microscope to find a thin hollow nanofiber having an outer diameter of 20 nm or less and an inner diameter of about 5 nm. Additionally, the hollow nanofiber was observed by a high-resolution transmission electron microscope to find that a wall of the nanofiber was constituted of a clean graphite layer, and thin carbon nanotubes of the number of layers set to 1 to 20, especially that of 2 to 5 layers (that of double-walled as primary components) were observed. Many nanofibers of diameters of 20 nm or more were observed.

Example 13

(Co+Fe)/TS-1

[Synthesis of crystalline titanosilicalite]

A 22% aqueous solution of tetrapropylammonium hydroxide (made by Tokyo Kasei Co., Ltd.) and silica sol (LudoxHS-40 by DuPont Corporation) (6 g) were placed in a beaker, and agitated for about 1 hour. Here, tetraisopropoxy titanium (0.34 g) (made by Nacalai Tesque, Inc.) was added to the solution, and the solution was agitated for 15 min. Then, distilled water (12.4 g) was added, and this was transferred to an autoclave of a teflon line, and left still at 75 ˚C for 3 hours. Next, the sample was heated at 175 ˚C for 48 hours. Then, the sample was cooled, filtered, washed by water, and dried, and then burned at 550 ˚C in air. X-ray diffraction (XRD) of these powders was measured to find TS-1 having an MFI type structure.

[Carrying of metal salt on thermal resistant zeolite]

Ferrous acetate (made by Aldrich) (0.04 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. The TS-1 powder (1. 0 g) was added to this suspension, and the suspension was treated by the ultrasonic cleaner for 10 minutes. Subsequently, by removing the methanol under a constant temperature of 60 ˚C, a catalyst having a metal salt carried on a crystal surface of the TS-1 was obtained.

[Photoelectron spectroscopic measurement of catalyst]

The catalyst having the metal salt carried on the TS-1 was burned in an argon gas at 900 ˚C for 30 minutes, and cooled to a room temperature in the argon gas. Then, the catalyst was taken out in air, and measured by an X-ray photoelectron spectrometer). A measured binding energy of a cobalt 2P3/2 electron was 779.8 eV. A binding energy of an Fe2P2/3 electron was 710.6 eV. Additionally, in a surface of a supporting material, an atomic ratio of cobalt was 0.6%, and an atomic ratio of iron was 0.1%.

As a result of observation through a transmission electron microscope (FIG. 18), formation of metal fine particles of diameters of about 3 nm in a zeolite surface was observed.

[Synthesis of double-walled nanofiber (900 ˚C)]

The TS-1 carrying the metal salt was taken out by 0.09 g, and argon was supplied by 250 ml/min, to a center quartz plate of a quartz tube of an inner diameter 100 mm. The quartz tube was installed in an electric furnace, and heated to a center temperature of 900 ˚C (heat-up time about 30 minutes). After 900 ˚C was reached, an ultrahigh purity acetylene gas (made by Koatsu Gas Kogyo Co., Ltd.) was supplied at 10 ml/min for 30 minutes, and then the supplying of the acetylene gas was stopped to cool the temperature to a room temperature.

A shape of a part of a reactant deposited on the quartz plate was measured by a transmission electron microscope to find generation of a bundle made of double-walled nanotubes having outer diameters of 15 nm or less and inner diameters of about 3 nm, and a double-walled carbon nanotube which was partially three or more layered. Many other observed products were carbon nanotubes of outer diameters of 15 nm or less, and the numbers of layers of 2 to 5. A slight amount of nanofibers of diameters of 20 nm or more was observed.

Example 14

(Co+Mn)/TS-1

[Carrying of metal salt on crystalline titanosilicate]

Manganese nitrate (made by Katayama Kagaku) (0.008 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. The TS-1 powder (1.0 g) of the example 2 was added to this suspension, and the suspension was treated by the ultrasonic cleaner for 10 minutes. Subsequently, by removing the methanol under a constant temperature of 60 ˚C, a catalyst having a metal salt carried on a crystal surface of the TS-1 was obtained.

[Photoelectron spectroscopic measurement of catalyst]

The catalyst having the metal salt carried on the TS-1 was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 780.0 eV. Additionally, in a surface of a supporting material, an atomic ratio of cobalt was 0.6%, and an atomic ratio of iron was 0.3%.

[Synthesis of nanofiber (800 ˚C)]

The TS-1 carrying the metal salt was taken out by 0.032 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and the supplying of the acetylene gas was stopped to cool the temperature to a room temperature.

A shape of a part of a reactant deposited on the quartz plate was measured by a transmission electron microscope to observe a large amount of double-walled to five-walled carbon nanotubes having outer diameters of 10 nm or less and inner diameters of about 3 nm. However, almost no nanofibers of diameters of 20 nm or more were observed.

Example 15

(Co+Fe)/silicalite (low heat resistance)

[Synthesis of low heat resistant silicalite]

Sodium hydroxide (First grate reagent by Katayama Kagaku Co., Ltd.) (0.28 g) was added to an aqueous solution of 20 to 25 % of tetrapropylammonium hydroxide (TPAOH) (20 g), and it was agitated. Further, fumed silica (made by Aldrich) (5 g) was added, and heating was executed up to 80 ˚C to obtain a transparent aqueous solution. This was put into an autoclave of poly 4-ethylene fluoride line, and heated at 125 ˚C for 8 hours. Thus, fine particles (average particle diameter of about 80 nm) of silicalite were obtained.

X-ray diffraction (XRD) of the obtained powder was measured to find silicaltie-1 having an MFI type structure. These powders were heated up to 800 ˚C at a temperature rising rate of 5 ˚C/min, in a gas flow of nitrogen 50 ml/min, by Shimadzu Corporation's thermal analyzer DTG- 50, and an exothermic peak appeared in a DTA curve from 700 ˚C to 800 ˚C.

[Carrying of metal salt on zeolite]

Ferrous acetate (made by Aldrich) (0.08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1.0 g) of the silicalite-1 was added to this suspension, and the suspension was treated by the ultrasonic cleaner for 10 minutes. Subsequently, by removing the methanol under a constant temperature of 60 ˚C, a catalyst having a metal salt carried on a crystal surface of the silicalite-1 was obtained.

[Photoelectron spectroscopic measurement of catalyst]

The catalyst having the metal salt carried on the silicalite-1 was burned in an argon gas at 800 ˚C for 30 minutes, and cooled to a room temperature in the argon gas. Then, the catalyst was taken out in air, and measured by an X-ray photoelectron spectrometer (10 kV, 18 mA). A measured binding energy of a cobalt 2P3/2 electron was 780.2 eV. A binding energy of an Fe 2P2/3 electron was 710.9 eV. Additionally, in a surface of a supporting material, an atomic ratio of cobalt was 0.7%, and an atomic ratio of iron was 0.3%.

[Synthesis of nanofiber (800 ˚C)]

The silicalite-1 carrying the metal salt was taken out by 0.031 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature.

A shape of a part of a reactant deposited on the quartz plate was measured by a transmission electron microscope to find a thin hollow nanofiber having an outer diameter of 20 nm or less and an inner diameter of about 5 nm. Additionally, the hollow nanofiber was observed by a high-resolution transmission electron microscope to find that a wall of the nanofiber was constituted of relatively clean graphite layer/layers, and many carbon nanotubes of the number of layers set to 1 to 20, especially double-walled to five-walled carbon nanotubes were observed. Many nanofibers of diameters of 20 nm or more were observed.

Example 16

(Co+Fe)/USY (silica-alumina ratio was 40)

[Carrying of metal salt on USY type zeolite]

A USY type zeolite (made by PQ Corporation, silica-alumina ratio was 40) (5 g) was added to a 0.1 N NaOH aqueous solution (300 ml), and it was agitated at a room temperature for 3 hours. This was filtered and washed by water. Ferrous acetate (made by Aldrich) (0.08 g) and cobalt acetate 4 hydrate (made by Nacalai Tesque, Inc.) (0.11 g) were added to ethanol (made by Nacalai Tesque, Inc.) (7 ml), and suspended by an ultrasonic cleaner for 10 minutes. The NaOH-treated USY type zeolite (1.0 g) was added to this suspension, and the suspension was treated by the ultrasonic cleaner for 10 minutes. Subsequently, by removing the ethanol under a constant temperature of 60 ˚C, a catalyst having a metal salt carried on powder of the USY type zeolite was obtained.

[Photoelectron spectroscopic measurement of catalyst]

The catalyst having the metal salt carried on the USY type zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3 / 2 electron was 779/5 eV. Additionally, in a surface of a supporting material, an atomic ratio of cobalt was 0.2%, and an atomic ratio of iron was 0.2%.

[Synthesis of nanofiber (800 ˚C)]

Powder of the USY type zeolite carrying the metal salt which was obtained in the aforementioned manner was taken out by 0.029 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature.

A shape of a reactant deposited on the quartz plate was measured by a transmission electron microscope to find a thin hollow nanofiber having an outer diameter of 20 nm or less and an inner diameter of about 5 nm. Additionally, the hollow nanofiber was observed by a high-resolution transmission electron microscope to find that a wall of the nanofiber was constituted of relatively clean graphite layer/layers. Carbon nanotubes of the number of layers set to 1 to 20, especially 1 to 5-layer carbon nanotubes were observed. A large amount of nanofibers of diameters of 20 nm or more were also observed.

Example 17

(Co+Fe)/TS-1

[Carrying of metal salt on TS-1 type zeolite]

Ferrous acetate (made by Aldrich) (0.008 g) and cobalt acetate 4 hydrate (made by Nacalai Tesque, Inc.) (0.11 g) were added to ethanol (made by Nacalai Tesque, Inc.) (7 ml), and suspended by an ultrasonic cleaner for 10 minutes. The TS-1 zeolite (made by NE Chemcat, silicon/titanium ratio was 50) (1.0 g) was added to this suspension, and the suspension was treated by the ultrasonic cleaner for 10 minutes. Subsequently, by removing the ethanol under a constant temperature of 60 ˚C, a catalyst having a metal salt carried on powder of the TS-1 type zeolite was obtained.

[Photoelectron spectroscopic measurement of catalyst]

The catalyst having the metal salt carried on the TS-1 type zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 779/9 eV. Additionally,

in a surface of a supporting material, an atomic ratio of cobalt was 0.8%, and an atomic ratio of iron was 0.6%.

[Synthesis of nanofiber (800 ˚C)]

Powder of the TS-1 zeolite carrying the metal salt which was obtained in the aforementioned manner was taken out by 0.029 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature.

A shape of a reactant deposited on the quartz plate was measured by a transmission electron microscope to find a thin hollow nanofiber having an outer diameter of 15 nm or less and an inner diameter of about 5 nm. Additionally, observation was made through a high-resolution transmission electron microscope to find that a wall of the nanofiber was constituted of relatively clean graphite layer/layers, and the numbers of layers for most carbon tubes was 2 to 5, and almost no nanofibers of diameters of 20 nm or more were observed.

Example 18

(Co+Fe)/TS-1

[Carrying of metal salt on TS-1 type zeolite]

Ferrous acetate (made by Aldrich) (0.064 g) and cobalt acetate 4 hydrate (made by Nacalai Tesque, Inc.) (0.088 g) were added to ethanol (made by Nacalai Tesque, Inc.) (7 ml), and suspended by an ultrasonic cleaner for 10 minutes. TS-1 zeolite (made by NE Chemcat, silicon/titanium ratio of 50) (1. 0 g) was added to this suspension, and the suspension was treated by the ultrasonic cleaner for 10 minutes. Subsequently, by removing the ethanol under a constant temperature of 60 ˚C, a catalyst having a metal salt carried on powder of the TS-1 zeolite was obtained.

[Photoelectron spectroscopic measurement of catalyst]

The catalyst having the metal salt carried on the TS-1 zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 7 7 9. 5 eV. Additionally, in a surface of a supporting material, an atomic ratio of cobalt was 0.6%, and an atomic ratio of iron was 0.05%.

[Synthesis of nanofiber (800 ˚C.)]

Powder of the TS-1 type zeolite carrying the metal salt which was obtained in the aforementioned manner was taken out by 0.029 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature.

A shape of a reactant deposited on the quartz plate was measured by a transmission electron microscope to find a thin hollow nanofiber having an outer diameter of 15 nm or less and an inner diameter of about 5 nm. Additionally, observation was made through a high-resolution transmission electron microscope to find that a wall of the nanofiber was constituted of relatively clean graphite layer/layers, and the number of layers for most of carbon nanotubes was 2 to 5. Many nanofibers of diameters of 20 nm or more were observed.

Example 19

(Co+Fe)/USY (silica-alumina ratio was 390)

[Carrying of metal salt on USY type zeolite]

Ferrous acetate (made by Aldrich) (0.064 g) and cobalt acetate 4 hydrate (made by Nacalai Tesque, Inc.) (0.088 g) were added to ethanol (made by Nacalai Tesque, Inc.) (7 ml), and suspended by an ultrasonic cleaner for 10 minutes. USY type zeolite (HSZ-390HUA by Tosoh Corporation, silica/alumina ratio of 390) (1.0 g) was added to this suspension, and the suspension was treated by the ultrasonic cleaner for 10 minutes. Subsequently, by removing the ethanol under a constant temperature of 60 ˚C, a catalyst having a metal salt carried on powder of the USY type zeolite

was obtained.

[Photoelectron spectroscopic measurement of catalyst]

The catalyst having the metal salt carried on the USY type zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 781.1 eV. Additionally, in a surface of a supporting material, an atomic ratio of cobalt was 1. 4%, and an atomic ratio of iron was 0.5%.

[Synthesis of nanofiber (800 ˚C)]

Powder of the USY type zeolite carrying the metal salt which was obtained in the aforementioned manner was taken out by 0.029 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature.

A shape of a reactant deposited on the quartz plate was measured by a transmission electron microscope to find a thin hollow nanofiber having an outer diameter of 20 nm or less and an inner diameter of about 1 to 3 nm. Additionally, observation was made through a high-resolution transmission electron microscope to find that a wall of the nanofiber was constituted of relatively clean graphite layer/layers, and the number of layers for most of carbon nanotubes was 1 to 20. Especially, many single-walled and one to five-layer carbon nanotubes were observed. Moreover, Some nanofibers of diameters of 20 nm or more were observed. Compared with the later-described example 11, a ratio of single-walled carbon nanotubes was high.

Example 20

Co/TS-1

[Carrying of metal salt on TS-1 type zeolite]

Cobalt acetate 4 hydrate (made by Nacalai Tesque, Inc.) (0.11 g) was added to ethanol (made by Nacalai Tesque, Inc.) (7 ml), and suspended by an ultrasonic cleaner for 10 minutes. TS-1 zeolite (made by NE Chemcat, silicon/titanium ratio was 50) (1. 0 g) was added to this suspension, and the suspension was treated by the ultrasonic cleaner for 10 minutes. Subsequently, by removing the ethanol under a constant temperature of 60 ˚C, a catalyst having a metal salt carried on powder of the TS-1 type zeolite was obtained.

[Photoelectron spectroscopic measurement of catalyst]

The catalyst having the metal salt carried on the TS-1 type zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 779.5 eV. Additionally, an atomic ratio of cobalt in a surface of a supporting material was 0.9%.

[Synthesis of nanofiber (800 ˚C)]

Powder of the TS-1 type zeolite carrying the metal salt which was obtained in the aforementioned manner was taken out by 0.029 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature.

A shape of a reactant deposited on the quartz plate was measured by a transmission electron microscope to find a thin hollow nanofiber having an outer diameter of 15 nm or less and an inner diameter of about 5 nm. Additionally, observation was made through a high-resolution transmission electron microscope to find that a wall of the nanofiber was constituted of graphite layer/layers of slightly low linearity, and the number of layers for most of carbon nanotubes was 2 to 5. Almost no nanofibers of diameters of 20 nm or more were observed.

Example 21

(Co+Fe)/USY (silica-alumina ratio was 390)

[Carrying of metal salt on USY type zeolite]

Ferrous acetate (made by Aldrich) (0.064 g) and cobalt acetate 4 hydrate (made by Nacalai Tesque, Inc.) (0.088 g) were added to ethanol (made by Nacalai Tesque, Inc.) (7 ml), and suspended by an ultrasonic cleaner for 10 minutes. USY type zeolite (HSZ-390HUA by Tosoh Corporation, silica/alumina ratio was 390) (1. 0 g) was added to this suspension, and the suspension was treated by the ultrasonic cleaner for 10 minutes. Subsequently, by removing the ethanol under a constant temperature of 60 ˚C, a catalyst having a metal salt carried on powder of the USY type zeolite was obtained.

[Photoelectron spectroscopic measurement of catalyst]

The catalyst having the metal salt carried on the USY type zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 781.1 eV. Additionally, in a surface of a supporting material, an atomic ratio of cobalt was 1.4%, and an atomic ratio of iron was 0.5%.

[Selective synthesis of single-walled carbon nanotube]

Powder of the USY type zeolite carrying the metal salt which was obtained in the aforementioned manner was taken out by 0.029 g, and argon was supplied by 30 ml/min, to the center quartz plate of the quartz tube of the inner diameter 30 mm. The quartz tube was installed in the electric furnace, and heated to a center temperature of 800 ˚C. Ethanol (highest grade reagent, Tokyo Kasei Co., Ltd.) was supplied by a microfeeder at 2,I mg/min for 30 minutes, and then the supplying of the ethanol was stopped to cool the temperature to a room temperature.

A shape of a product deposited on the quartz plate of the quartz tube was measured by a scanning electron microscope JSM-6301NF of JEOL Datum Ltd., to find many extremely thin nanofibrous materials. Further, observation was made through a high-resolution transmission electron microscope to find that most of the products were single-walled carbon nanotubes of diameters of 20 nm or less. No nanofibers of diameters of 20 nm or more were observed.

Example 22

Co/TS-I

[Carrying of metal salt on TS-1 type zeolite]

Cobalt acetate 4 hydrate (made by Nacalai Tesque, Inc.) (0.22 g) was added to ethanol (made by Nacalai Tesque, Inc.) (7 ml), and suspended by an ultrasonic cleaner for 10 minutes. TS-1 zeolite (made by NE Chemcat, silicon/titanium ratio was 50) (1.0 g) was added to this suspension, and the suspension was treated by the ultrasonic cleaner for 10 minutes. Subsequently, by removing the ethanol under a constant temperature of 60 ˚C, a catalyst having a metal salt carried on powder of the TS-1 zeolite was obtained.

[Photoelectron spectroscopic measurement of catalyst]

The catalyst having the metal salt carried on the TS-1 type zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 779.7 eV. Additionally, an atomic ratio of cobalt in a surface of a supporting material was 1. 8%.

[Synthesis of nanofiber (800 ˚C)]

Powder of the TS-1 type zeolite carrying the metal salt which was obtained in the aforementioned manner was taken out by 0.029 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 1 ml/min for 30 minutes, and then the supplying of the acetylene gas was stopped to cool the temperature to a room temperature.

A shape of a reactant deposited on the quartz plate was measured by a scanning electron microscope JSM-6301NF of JEOL Datum Ltd., to find a very small amount of produced hollow nanofibers, but a carbon nanotube having an outer diameter of 20 nm or less and an inner diameter of about 5 nm was observed. Additionally, observation was made through a high-resolution transmission electron microscope to find that a wall of the nanofiber was constituted of relatively clean graphite layer/layers, and double-walled to five-walled carbon nanotubes were observed. On the average, the nanotubes were thicker than those of the example 9. No nanofibers of diameters of 20 nm or more were observed.

Example 23

(Co+Fe)/TS-1

[Carrying of metal salt on TS-1 type zeolite]

An iron acetylacetonate complex (made by Nihon Kagaku Sangyo Co., Ltd.) (0.021g) and a cobalt acetylacetonate complex (made by Nihon Kagaku Sangyo Co., Ltd.) (0.2 g) was added to acetone (made by Nacalai Tesque, Inc.) (7 ml), and suspended by an ultrasonic cleaner for 10 minutes. TS-1 zeolite (made by NE Chemcat, silicon/titanium ratio was 50) (2.0 g) was added to this suspension, and the suspension was treated by the ultrasonic cleaner for 10 minutes. Subsequently, by removing ethanol under a constant temperature of 60 ˚C, a catalyst having a metal salt carried on powder of the TS-1 zeolite was obtained.

[Photoelectron spectroscopic measurement of catalyst]

The catalyst having the metal salt carried on the TS-1 type zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 780.0 eV. Additionally, in a surface of a supporting material, an atomic ratio of cobalt was 1.4%, and an atomic ratio of iron was 0.14%.

[Synthesis of nanofiber (800 ˚C)]

Powder of the TS-1 type zeolite carrying the metal complex which was obtained in the aforementioned manner was taken out by 1.0 g, and argon was supplied by 60 ml/min, to a center quartz wool of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd.) was supplied at 0.5 ml/min for 300 minutes, and then the supplying of the acetylene gas was stopped to cool the temperature to a room temperature.

A shape of a reactant deposited on the quartz plate was measured by a transmission electron microscope to find a thin hollow nanofiber having an outer diameter of 15 nm or less and an inner diameter of about 5 nm. Additionally, observation was made through a high-resolution transmission electron microscope to find that a wall of the nanofiber was constituted of relatively clean graphite layer/layers, the number of layers for all the carbon nanotubes was 2 to 5, and especially double-walled carbon nanotube was a primary component. No nanofibers of diameters of 20 nm or more were observed.

Example 24

(Example 24)

(Co+Fe)/borosilicate

[Carrying of metal salt on borosilicate type zeolite]

Ferrous acetate (made by Aldrich) (0.064 g) and cobalt acetate 4 hydrate (made by Nacalai Tesque, Inc.) (0.088 g) were added to ethanol (made by Nacalai Tesque, Inc.) (7 ml), and suspended by an ultrasonic cleaner for 10 minutes. Borosilicate zeolite (made by NE Chemcat, silicon/boron ratio was 50) (1. 0 g) was added to this suspension, and the suspension was treated by the ultrasonic cleaner for 10 minutes. Subsequently, by removing the ethanol under a constant temperature of 60 ˚C, a catalyst having a metal salt carried on powder of the borosilicate type zeolite was obtained.

[Synthesis of nanofiber (800 ˚C)]

Powder of the borosilicate type zeolite carrying the metal complex which was obtained in the aforementioned manner was taken out by 0.1 g, and argon was supplied by 60 ml/min, to a center quartz wool of a quartz tube of an inner diameter 30 mm. The quartz tube was installed in an electric furnace, and heated to a center temperature of 800 ˚C. Ethanol was supplied as a gas by a microfeeder at 0.5 ml/min for 300 minutes. Incidentally, under this condition, solid catalyst weight (including supporting material)/source gas flow rate (including carrier gas) was 1.7%$10^{-3}$ (g(catalyst) ·min/ml). Subsequently, the supplying of the ethanol was stopped to cool the temperature to a room temperature.

[Photoelectron spectroscopic measurement of catalyst]

The catalyst having the metal salt carried on the borosilicate zeolite was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 780.1 eV. Additionally, in a surface of a supporting material, an atomic ratio of cobalt was 1. 4%, and an atomic ratio of iron was 0.07%.

A shape of a reactant deposited on the quartz plate was measured by a high-resolution transmission electron microscope to find a bundle of thin double-walled carbon nanotubes having outer diameters of 1. 5 nm or less and inner diameters of about 0.8 nm. Additionally, observation was made through the high-resolution transmission electron microscope to find that a wall of the nanofiber was constituted of relatively clean graphite layer/layers, and the number of layers for all the carbon nanotubes was 1 to 5. No nanofiber of diameter of 20 nm or more was observed. As a result of Raman spectroscopy thereof (FIG. 24), a peak in a range of 1500 to 1650 $cm^{-1}$ was observed in a split manner.

Comparative Example 3

(Co+Fe)/USY (silica-alumina ratio was 390)

[Heat resistance evaluation of Y type zeolite]

An Na-Y type zeolite (made by Tosoh Corporation) was heated up to 900 ˚C at a temperature rising rate of 5 ˚C/min, in a gas flow of nitrogen 50 ml/min, by Shimadzu Corporation's thermal analyzer DTG- 50. As a result, an exothermic peak appeared in a DTA curve. Exothermic heat generation started at 760 ˚C, and reached its peak at 867 ˚C.

This zeolite was subjected to powder X-ray diffraction measurement after burning in a nitrogen gas flow at 600 ˚C for 30 minutes, and powder X-ray diffraction measurement after burning at 900 ˚C for 30 minutes. In the XRD diffraction pattern of the sample burned at 900 ˚C, no zeolite peak appeared.

[Carrying of metal salt on Y type zeolite]

Ferrous acetate (made by Aldrich) (0.08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1.0 g) of the Na-Y type zeolite (made by Tosoh Corporation) was added to this suspension, and the suspension was treated by the ultrasonic cleaner for 10 minutes. Subsequently, by removing the methanol under a constant temperature of 60 ˚C, a catalyst having a metal salt carried on the Na-Y type zeolite powder was obtained.

[Photoelectron spectroscopic measurement of catalyst]

The catalyst having the metal salt carried on the Na-Y was burned in an argon gas at 900 ˚C for 30 minutes, and cooled to a room temperature in the argon gas. Then, the catalyst was taken out in air, and measured by an X-ray photoelectron spectrometer. A measured binding energy of a cobalt 2P3/2 electron was 781.3 eV. Additionally, in a surface of a supporting material, an atomic ratio of cobalt was 0.6%, and an atomic ratio of iron was 0.3%. A binding energy of an Fe 2P2/3 electron was 710.9 eV.

[Synthesis of nanofiber (600 ˚C)]

The Na-Y type zeolite powder carrying the metal salt which was obtained in the aforementioned manner were taken out by 0.029 g, and nitrogen was supplied by 30 ml/min, to a center quartz plate of a quartz tube of an inner diameter 30 mm. The quartz tube was installed in an electric furnace, and heated to a center temperature of 600 ˚C. An ultrahigh purity acetylene gas (made by Koatsu Gas Kogyo Co., Ltd.) was supplied at 6 ml/min for 30 minutes, and then the supplying of the acetylene gas was stopped to cool the temperature to a room temperature.

A shape of a reactant deposited on the quartz plate was measured by a scanning electron microscope JSM-6301NF of JEOL Datum Ltd. to find that a very small amount of hollow nanofibers were produced. However, a small amount of thin carbon nanotube having an outer diameter of 20 nm or less and an inner diameter of about 5 nm was observed. Additionally, observation was made through a high-resolution transmission electron microscope to find that a wall of the nanofibers was constituted of relatively clean graphite layer/layers. The reactant included carbon nanotubes having the number of layers mostly in the range from 1 to 20 layers. Particularly, carbon nanotubes having 2 to 5 layers were hardly observed; accordingly, the carbon nanotubes were generally thick. In the meantime, many carbon nanotubes were observed to have diameters of 20 nm and above. Comparative Example 4

(Co+Fe)/Na-Y type

[Carrying of metal salt on Y type zeolite]

Ferrous acetate (made by Aldrich) (0.08 g) and cobalt acetate 4 hydrate (made by Nacalai Tesque, Inc.) (0.11 g) were added to methanol (made by Nacalai Tesque, Inc.) (7 ml), and suspended by an ultrasonic cleaner for 10 minutes. Powder (1. 0 g) of Na-Y type zeolite (made by Tosoh Corporation, silica alumina ratio was 5.1) was added to this suspension, and the suspension was treated by the ultrasonic cleaner for 10 minutes. Subsequently, by removing the methanol under a constant temperature of 60 ˚C, a catalyst was obtained.

[Photoelectron spectroscopic measurement of catalyst]

The catalyst having the metal salt carried on the Na-Y type zeolite was burned in an argon gas at 800 ˚C for 30 minutes, and cooled to a room temperature in the argon gas. Then, the catalyst was taken out in air, and measured by an X-ray photoelectron spectrometer. A measured binding energy of a cobalt 2P3/2 electron was 779.2 eV. A binding energy of an Fe 2P2/3 electron was 709.9 eV. Additionally, in a surface of a supporting material, an atomic ratio of cobalt was 2.9%, and an atomic ratio of iron was 0.6%.

[Synthesis of nanofiber (800 ˚C)]

The catalyst was taken out by 0.03 g, and argon was supplied by 30 ml/min, to a center quartz plate of a quartz tube of an inner diameter 30 mm. The quartz tube was installed in an electric furnace, and heated to a center temperature of 800 ˚C. An ultrahigh purity acetylene gas (made by Koatsu Gas Kogyo Co., Ltd. was supplied at 6 ml/min for 30 minutes, and the supplying of the acetylene gas was stopped to cool the temperature to a room temperature.

A Shape of a reactant deposited on the quartz plate was measured with a high-resolution transmission electron microscope. A large amount of hollow nanofibers having outer diameters of 20 nm or more, and a small amount of carbon nanotubes having outer diameters not more than 20 nm and the number of layers in the range from 5 to 20 layers were observed. Graphite layers of the obtained carbon nanotubes had few defects. The carbon nanotubes having 2 to 5 layers were hardly observed, and the carbon nanotubes were generally thick.

Example 25

[Synthesis of membranous zeolite 1]

Sodium hydroxide (made by Katayama Chemical Industries Co., Ltd., 1st grade) (0.28 g) was added to a 20-25% aqueous solution of tetrapropylammonium hydroxide (TPAOH) (a 20-25% aqueous solution made by Tokyo Kasei Kogyo Co. Ltd) (20 g) and the mixture was agitated. Moreover, fumed silica (made by Aldrich) (5 g) was added and the mixture was heated up to 80˚C, whereby a transparent aqueous solution was obtained. This aqueous solution was put into an autoclave of a polytetrafluoroethylene line and was heated at 225˚C for 8 hours. As a consequence, fine particles (average grain sizes of about 80 nm) of silicalite were obtained. Distilled water was added thereto and silicalite colloid containing 0.05 wt% of silicalite was thereby obtained.

A porous support made of α-alumina in a square shape having each edge of 1.4 cm and a thickness of 3 mm (formed by cutting a ceramic membrane (100 mm x 100 mm x 3 mm) made by NGK Insulators, Ltd into the foregoing dimensions: only one surface was coated with alumina fine particles in a thickness of about 50 μm, an average pore diameter was 0.1 μm) was dipped in a lactic acid (made by Katayama Chemical Industries Co., Ltd., special grade) solution for 5 minutes. Thereafter, the support was taken out and placed on a paper towel while setting the surface coated with the alumina fine particles upward, and then the support was left to stand until the lactic acid infiltrated from the surface of the support into the inside thereof and the droplet disappeared from the surface. Next, water was added to the silicalite colloid synthesized according to the above-described method and a 0.5-wt% solution was obtained. This

sol (0.24 g) was delivered by drops onto the support infiltrated with the lactic acid as uniformly as possible for the purpose of coating. Thereafter, the support was air-dried at a room temperature and then baked at 550° C for 3 hours, and a membranous zeolite 1 coated on the alumina support was thereby obtained.

The thickness of the membranous zeolite 1 turned out to be 0.5 μm as a result of cross-sectional observation with a scanning electron microscope.

[Synthesis of membranous zeolite 2 with enhanced orientation]

The membranous zeolite 1 was dipped in about 20 g of sol having a composition of 40 $SiO_2$ : 12 TPAOH (tetrapropylammonium hydroxide) : 430 $H_2O$ for 20 minutes. Here, Ludox HS-40 (made by Du Pont) was used as a source of $SiO_2$ The support was taken out, and after the excessive sol attached to the surface of the support was dripped off, the support was left to stand for 24 hours under dry air. This support was exposed to water vapor at 150°C for 24 hours. After water cleaning and drying, the support was baked at 550° C for 24 hours. Here, a temperature rising rate during baking was set to 0.6° C/min and a temperature decreasing rate was set to 1.2°C/min. As a result of X-ray diffraction and observation with an electron microscope, formation of a silicalite thin film on the porous support was confirmed. This thin film will be defined as a membranous zeolite 2. As a result of cross-sectional observation with the scanning electron microscope, the thickness of the membranous zeolite turned out to be 2.0 μm. An X-ray diffraction pattern is shown in Fig. 19. In comparison with a powder X-ray diffraction pattern (Fig. 20) (Zeolites, 16, 1996, p525), intensity ratios of peaks A and B in the case of the powder shown in the drawing are reverse to the case of the membrane, and the membrane was found to be slightly oriented. In Fig 1, A/B is equal to 0.68, and in Fig. 2, A/B is equal to 1.94.

[Synthesis of membranous zeolite 3: Y type zeolite]

A 20-25% aqueous solution of tetrapropylammonium hydroxide (TPAOH) (a 20-25% aqueous solution made by Tokyo Kasei Kogyo Co. Ltd) was added to distilled water (30 g) so as to set the pH in the range from 11 to 12. Then, Y-type zeolite powder (made by Tosoh Corporation) (0.3 g) was put in and was dispersed with an ultrasonic cleaner.

A porous support made of α-alumina in a square shape having each edge of 1.4 cm and a thickness of 3 mm (formed by cutting a ceramic membrane (100 mm x 100 mm x 3 mm) made by NGK Insulators, Ltd into the foregoing dimensions: only one surface was coated with alumina fine particles in a thickness of about 50 μm, an average pore diameter was 0.1 μm) was dipped in a lactic acid (made by Katayama Chemical Industries Co., Ltd., special grade) solution for 5 minutes. Thereafter, the support was taken out and placed on a paper towel while setting the surface coated with the alumina fine particles upward, and then the support was left to stand until the lactic acid infiltrated from the surface of the support into the inside thereof and the droplet disappeared from the surface. Next, the Y type zeolite (0.24 g) dispersed in advance was delivered by drops onto the support infiltrated with the lactic acid as uniformly as possible for the purpose of coating. Thereafter, the support was air-dried at a room temperature and then baked at 600° C for 2 hours, and a membranous zeolite 3 coated on the alumina support was thereby obtained. The thickness of the membranous zeolite turned out to be 1.0 μm as a result of cross-sectional observation with a scanning electron microscope.

[Synthesis of membranous zeolite 4 with enhanced orientation: Y type zeolite]

Aluminum hydroxide (made by Katayama Chemical Industries Co., Ltd.) (0.8 g) and sodium hydroxide (made by Katayama Chemical Industries Co., Ltd.) (3.9 g) were put into distilled water (28 g), and the mixture was heated and agitated at 70° C for 90 minutes. A sodium silicate solution No. 1 (made by Kishida Chemical Co., Ltd.) (8.2 g) was dissolved in distilled water (26 g), and the solution was agitated at 70° C for 1 hour. The both fluids were mixed and agitated, and a cloudy aluminosilicate solution was thereby obtained.

The membranous zeolite 3 coated on the alumina support was put into a 5-ml Teflon-lined autoclave, then the obtained aluminosilicate solution (3 ml) was added thereto and the support was heated at 80° C for 24 hours. The support was taken out and the surfaces thereof were cleaned with distilled water. Then, the support was dried at 50°C. for 2 hours and then baked at 400°C for 2 hours. Here, a temperature rising rate during baking was set to 0.6°C/min and a temperature decreasing rate was set to 1.2° C/min. As a result of X-ray diffraction and observation with an electron microscope, formation of a Y type zeolite thin film on the porous support was confirmed. This thin film will be defined as a membranous zeolite 4. As a result of cross-sectional observation with a scanning electron microscope, the thickness of the membranous zeolite turned out to be 3.0 μm.

[Support of metal salt onto membranous zeolite]

The membranous zeolite 4 was dipped for 30 minutes in a solution obtained by dissolving ferrous acetate

(made by Aldrich) (0.08 g) and cobalt acetate (made by Nacalai Tesque, Inc.) (0.11 g) in ethanol (made by Nacalai Tesque, Inc.) (7 ml), and then the membranous zeolite 4 was dried at 60˚C.

[Synthesis of nanofibers (600˚ C)]

The membranous zeolite carrying the metal salt was placed in the central part of a quartz tube having an inner diameter of 30 mm, and nitrogen was supplied thereto by 30 ml/min. The quartz tube was installed in an electric furnace and was heated to a center temperature of 600˚ C. An ultrahigh purity acetylene gas (made by Koatsu Gas Kogyo Co., Ltd.) was supplied at 6 ml/min for 30 minutes, and then supply of the acetylene gas was stopped to cool the temperature to a room temperature. The reactant deposited on the quartz plate was scraped off and shapes thereof were measured with a scanning electron microscope JSM-6301NF made by JEOL Datum Ltd. It was found that nanofibers having outer diameters not more than 50 nm were obtained. There was very little deposition of amorphous carbons. As a result of observation with a transmission electron microscope, the primary component was turned out to be thin hollow nanofibers having outer diameters not more than 30 nm and inner diameters of about 5 nm. As a result of observation of the hollow nanofibers with a high-resolution transmission electron microscope, walls of the nanofibers were formed of graphite layers. The results are shown in Table 1. The degree of entwinement of the carbon nanotubes generated from the membranous zeolite 2 was less than the case of the membranous zeolite 1. A substance obtained by scraping off the carbon nanotubes after generation from the membranous zeolite 2 or 4 and then subjected to baking showed no weight change. Accordingly, it is conceivable that the intensity of XRD of the membrane was increased. Moreover, thick carbon nanotubes were generated less from the membranous zeolites 2 and 4.

[Treatment after synthesis of nanofibers]

The membranous zeolite after scraping off the nanofibers was baked in the air at 500˚ C and was then subjected to thin-film X-ray diffraction measurement. As a result, a diffraction pattern attributable to the zeolite was obtained.

Example 26

[Carrying of metal salt on heat resistant zeolite (high flow rate)]

Ferrous acetate (made by Aldrich) (0.10 g) and cobalt acetate 4 hydrate (made by Nacalai Tesque, Inc.) (0.06 g) were added to methanol (made by Nacalai Tesque, Inc.) (7 ml), and suspended by an ultrasonic cleaner for 10 minutes. Powder (1. 0 g) of the TS-1 was added to this suspension, and the suspension was treated by the ultrasonic cleaner for 10 minutes. Subsequently, by removing the methanol under a constant temperature of 60 ˚C, a catalyst carrying a metal salt on a crystal surface of the TS-1 was obtained.

[Synthesis of double-walled nanotube (800 ˚C)]

A center of a vertical type quartz tube of an inner diameter of 30 mm was packed with quartz wool, the TS-1 carrying the metal salt which was obtained in the aforementioned manner was taken out by 1.0 g thereonto, and argon was supplied by 600 ml/min. The quartz tube was installed in an electric furnace, and heated to a center temperature of 800 ˚C (heat-up time was 30 minutes). After 800 ˚C was reached, an ultrahigh purity acetylene gas (made by Koatsu Gas Kogyo Co., Ltd.) was supplied at 5 ml/min for 30 minutes, and then the supplying of the acetylene gas was stopped to cool the temperature to a room temperature.

A shape of a part of a reactant deposited on the quartz wool was measured by a high-resolution transmission electron microscope to find that many double-walled nanotubes of inner diameters of about 4 nm ware produced. As a result of Raman spectroscopy, when a G/D ratio was 2.75 and many peaks were observed in the range from 150 to 350 $cm^{-1}$.

[Refinement of double-walled nanotube]

The composite of the synthesized double-walled nanotubes, the TS-1, and the metal catalyst was added to a 5% hydrofluoric acid aqueous solution and the mixture was vigorously agitated for 3 hours. This mixture was filtered and cleaned with distilled water for several times. A black solid substance thus obtained was dried and subjected to an element analysis by EDX. As a result, concentrations of silicon and titanium attributable to the TS-1 were below detection limit. Subsequently, the black solid substance was baked in the air at 300˚C for 2 hours. Thereafter, the black solid substance was vigorously agitated in a IN hydrochloric acid aqueous solution for 3 hours. This mixture was filtered and cleaned with distilled water for several times. The black solid substance thus obtained was dried and subjected to an

element analysis by EDX. As a result, cobalt attributable to the catalyst metal was 0.1 wt% and iron was 0 wt%. Moreover, as a result of observation of the sample after the process with a transmission electron microscope, the double-walled nanotubes were observed as similar to the state before the process Here, the percentage of fibrous materials was about 80%.

As described above, according to the present invention of claim 1, in terms of a manufacturing method of a CVD method applying a zeolite as a supporting material of a metal catalyst, it is possible to manufacture carbon nanotubes having thin profiles in spite of a generation reaction at a high temperature and having less defects of graphite layers. Moreover, according to the present invention of claim 6, in addition to the foregoing effect, it is possible to manufacture multi-walled carbon nanotubes having two to five layers with excellent durability in spite of thin profiles. Furthermore, according to the present invention of claims 8, 9, and 10, it is possible to control thickness and the number of layers of carbon nanotubes to be generated. In addition, according to the present invention of claim 20, it is possible to reuse the zeolite which is the supporting material of the metal catalyst and to facilitate separation and removal of the generated carbon nanotubes out of the zeolite.

INDUSTRIAL APPLICABILITY

The carbon nanotube manufactured according to the present invention can be developed into wide applications. For example, the carbon nanotube has high mechanical strength and high electric conductivity. By use of such properties, the carbon nanotube is applicable to a negative electrode material for a fuel cell or a lithium secondary battery, or to a high-intensity resin material, an electrically conductive material, an electromagnetic-wave shielding material or the like by means of forming a composite material together with resin or organic semiconductor. Moreover, the carbon nanotube has a nanosized space. Accordingly, the carbon nanotube is applicable to an absorbent material, a nanocapsule for a medicine, an contrast medium for MRI, or the like. Furthermore, the carbon nanotube has a very thin tip. Accordingly, the carbon nanotube is applicable to an electron source for field emission, a nanotweezers using one fiber on each end, a probe for a scanning tunneling microscope, or the like.

## Claims

**1.** A composition containing hollow nanofibers, the composition satisfying all of the following requirements:

(1) 50% or more of the composition consists of single-walled to five-walled carbon nanotubes;
(2) a bundle of double-walled carbon nanotubes can be seen when the composition is observed by a high-resolution transmission electron microscope;
(3) double-walled carbon nanotubes having an inner diameter from 0.4 nm to 1.0 nm can be seen when the composition is observed by a high-resolution transmission electron microscope; and
(4) a peak is observed at 150 to 350 $cm^{-1}$ when the composition is measured using the resonance Raman scattering method.

**2.** The composition according to claim 1, wherein a peak in a range of 1500 to 1650 $cm^{-1}$ is observed in a split state when the composition is measured using the resonance Raman scattering method.

**3.** A composition containing hollow nanofibers, the composition satisfying all of the following requirements:

(1) 50% or more of the composition consists of single-walled to five-walled carbon nanotubes;
(2) double-walled carbon nanotubes can be seen when the composition is observed by a high-resolution transmission electron microscope;
(3) 50% or more of the composition consists of a fibrous substance as observed by a scanning electron microscope;
(4) a total amount of transition metal in the composition is 1 wt % or less; and
(5) a peak is observed at 150 to 350 $cm^{-1}$ when the composition is measured using the resonance Raman scattering method.

**4.** The composition according to any one of claims 1 to 3, further satisfying the following requirement:

a G/D ratio is 1.5 or more and 20 or less;
wherein G is the maximum peak intensity in a range of 1560 to 1600 $cm^{-1}$ and D is the maximum peak intensity in a range of 1310 to 1350 $cm^{-1}$ in a spectrum obtained by measuring the composition using the resonance

Raman scattering method.

Fig.1

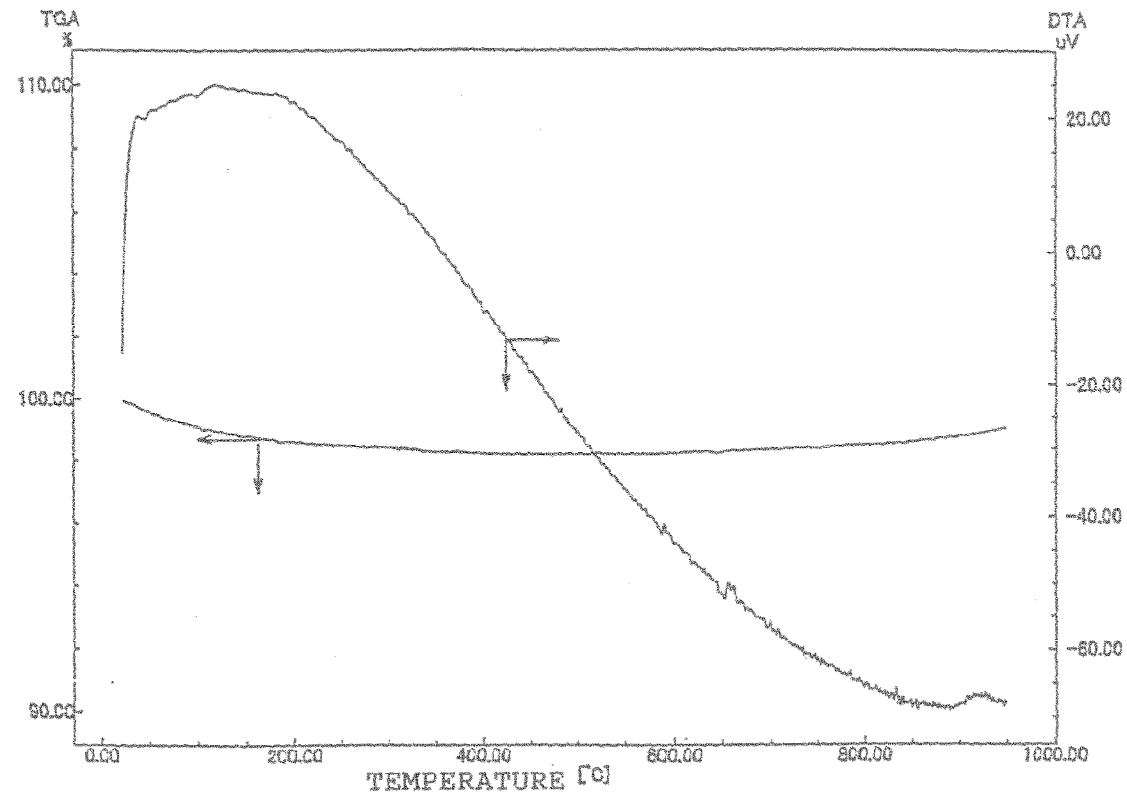
TGA
%
110.00
100.00
90.00
DTA
uV
20.00
0.00
-20.00
-40.00
-60.00
0.00
200.00
400.00
600.00
800.00
1000.00
TEMPERATURE [°C]

Fig.2

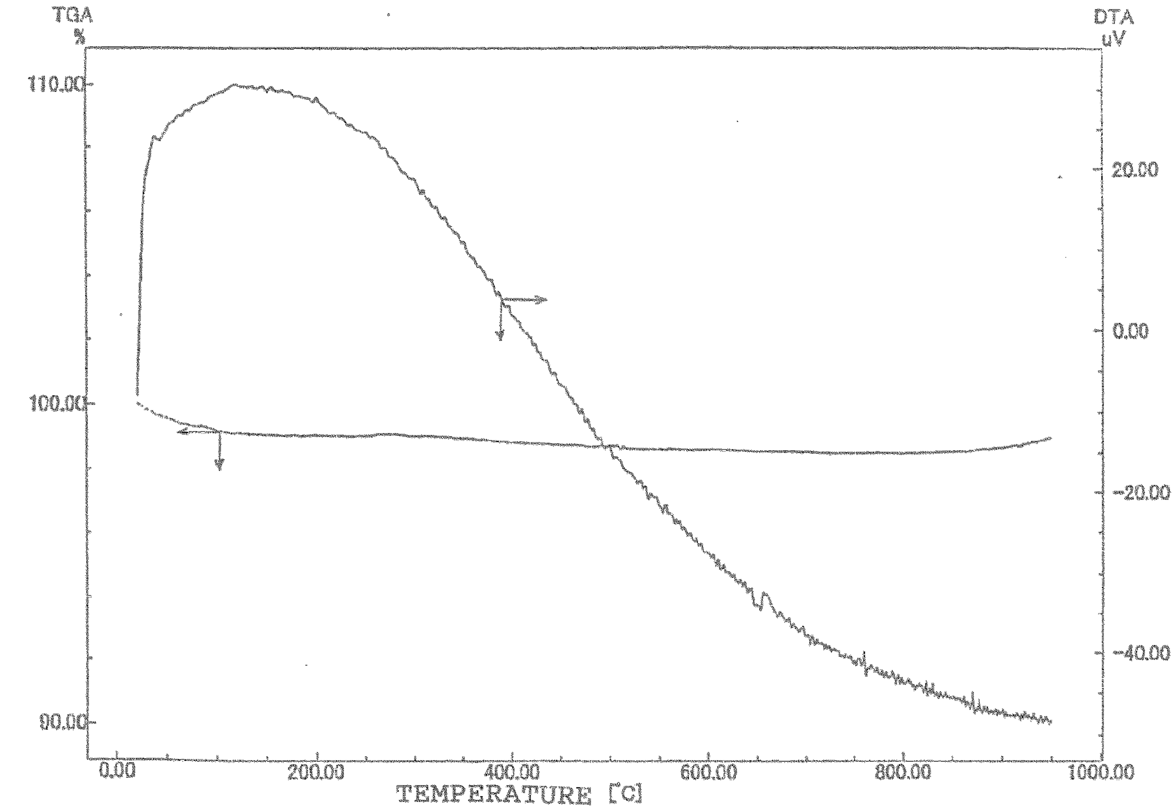
TGA
%
DTA
uV
110.00
100.00
90.00
20.00
0.00
-20.00
-40.00
0.00
200.00
400.00
600.00
800.00
1000.00
TEMPERATURE [C]

Fig.3

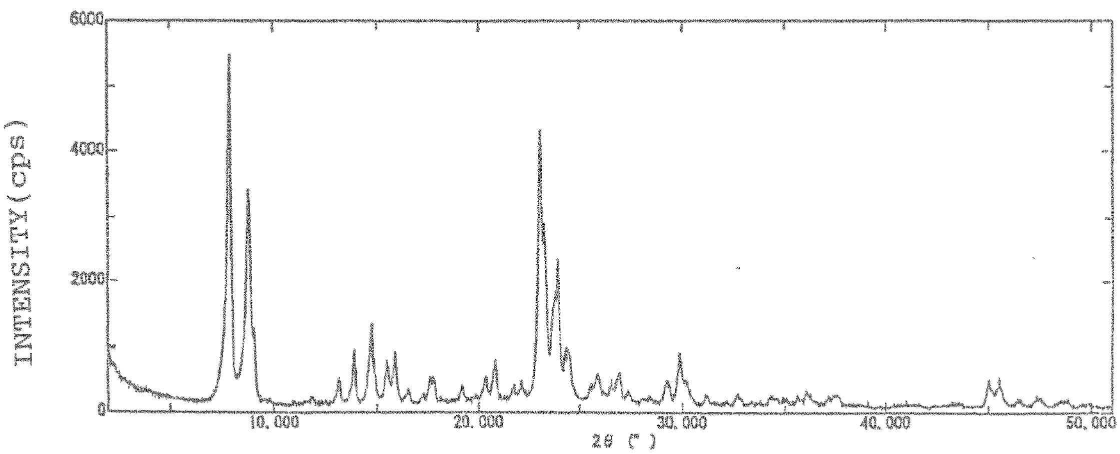
6000
4000
2000
0
INTENSITY (cps)
10.000
20.000
30.000
40.000
50.000
2θ (°)

Fig.4(A)

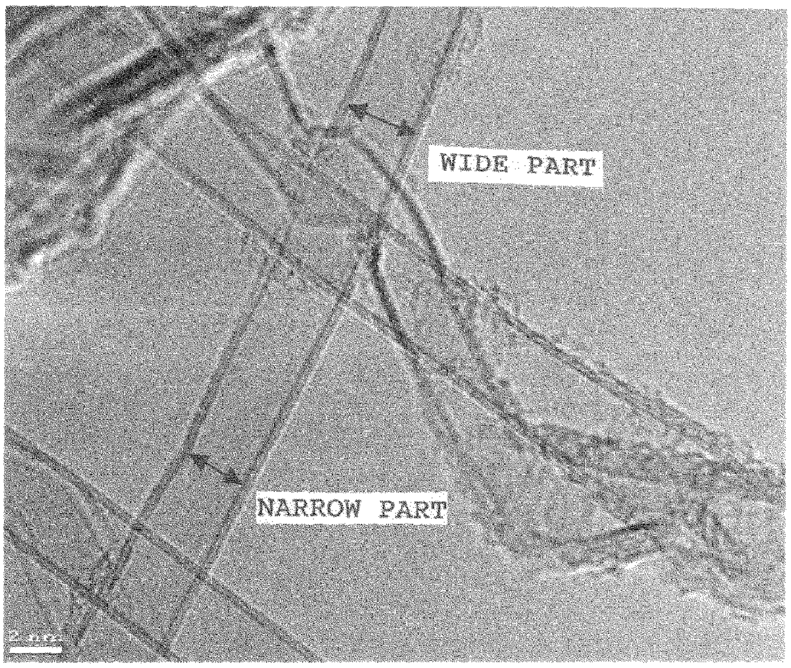


Fig.4(B)

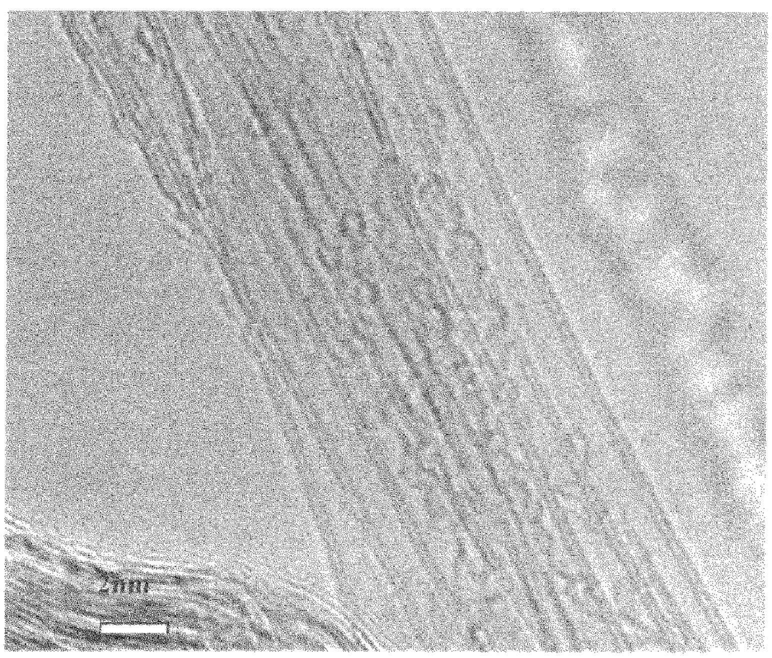

Fig.5

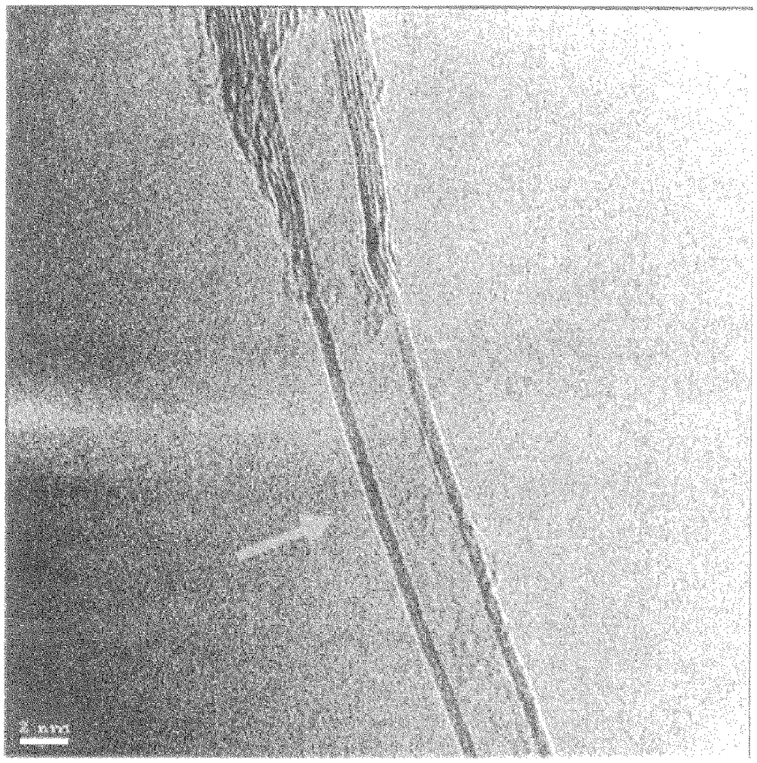


Fig.6

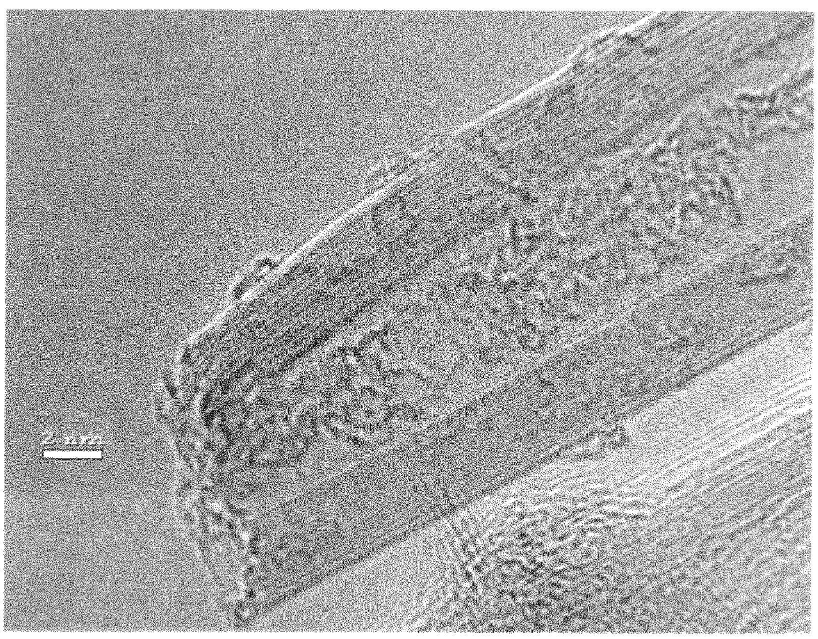

Fig.7(A)

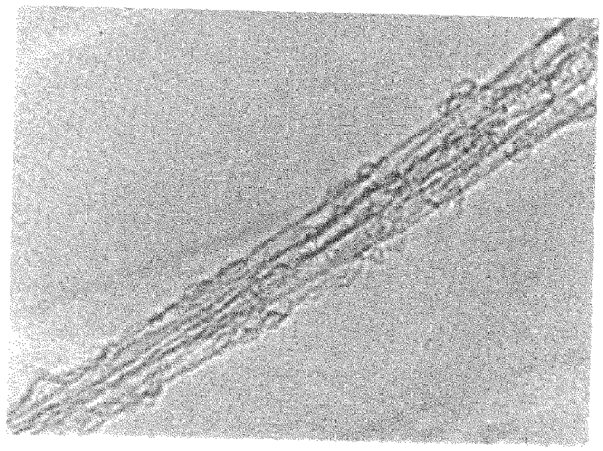

Fig.7(B)

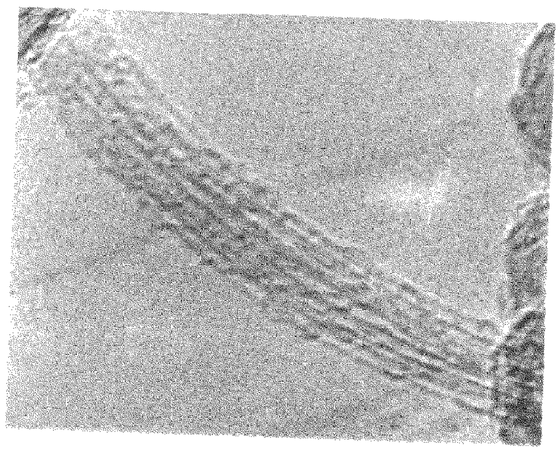

Fig.7(C)

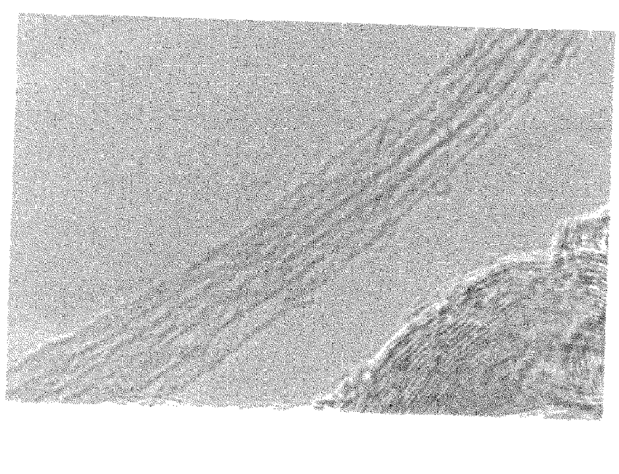

Fig.8

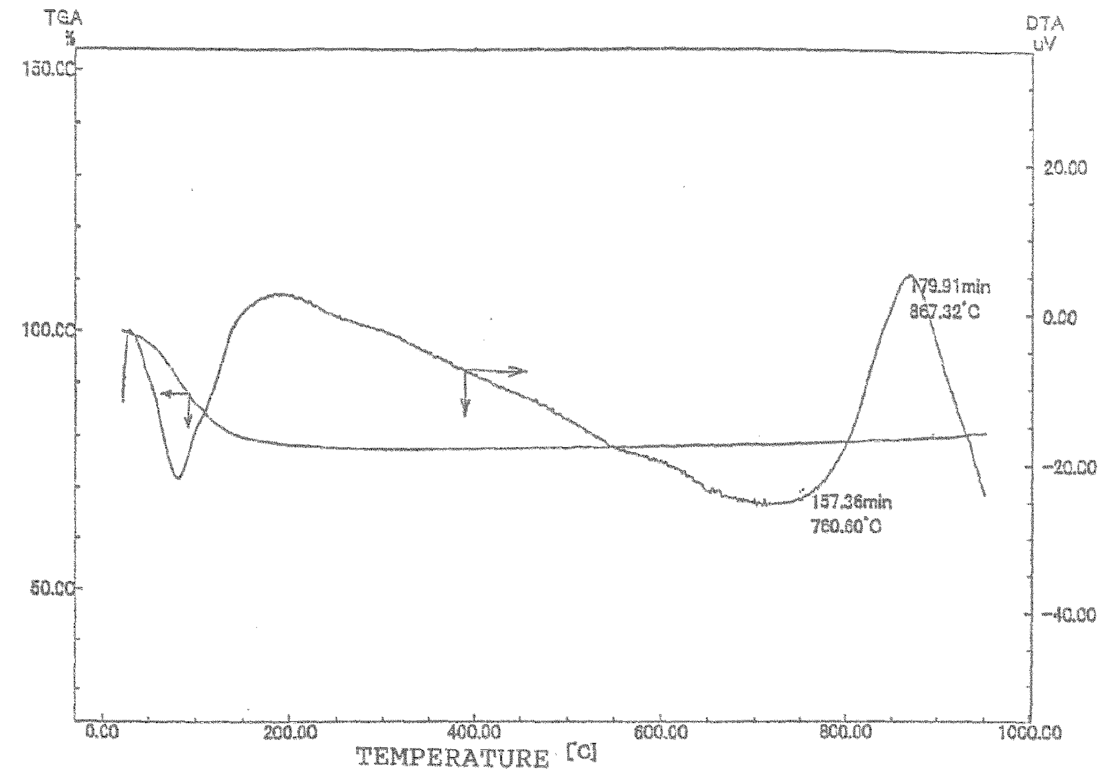
TGA
%
150.00
100.00
50.00
DTA
uV
20.00
0.00
-20.00
-40.00
179.91min
867.32°C
157.36min
760.60°C
0.00
200.00
400.00
600.00
800.00
1000.00
TEMPERATURE [C]

Fig.9

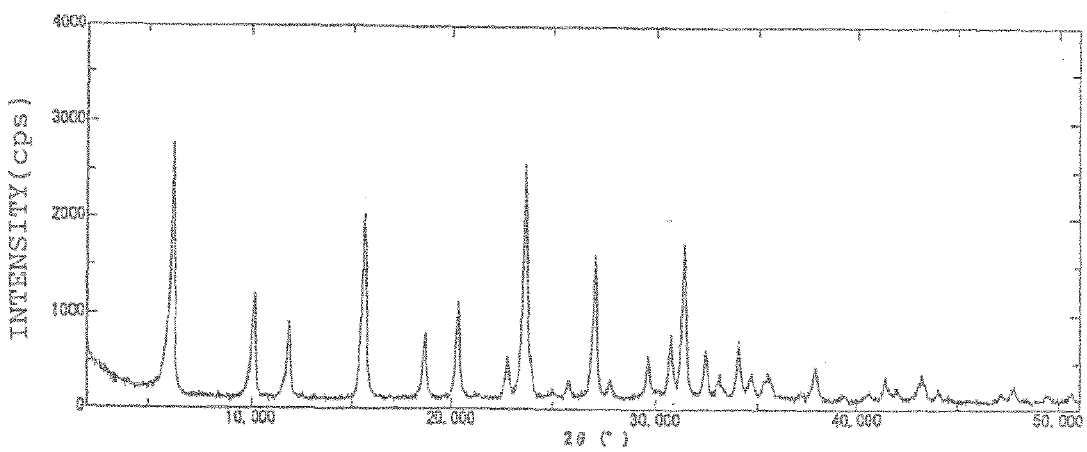
4000
3000
2000
1000
0
INTENSITY(cps)
10.000
20.000
30.000
40.000
50.000
2θ (°)

Fig.10

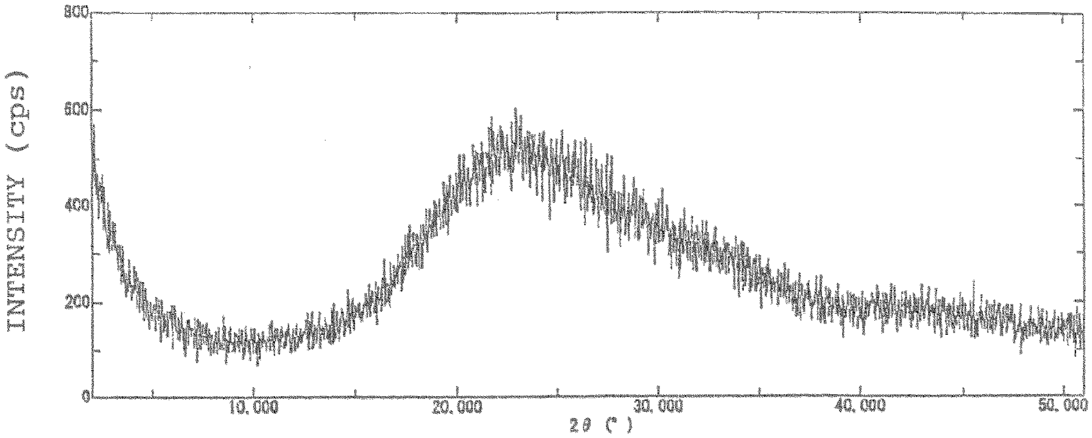
INTENSITY (cps)
800
600
400
200
0
10.000
20.000
30.000
40.000
50.000
2θ (°)

Fig.11

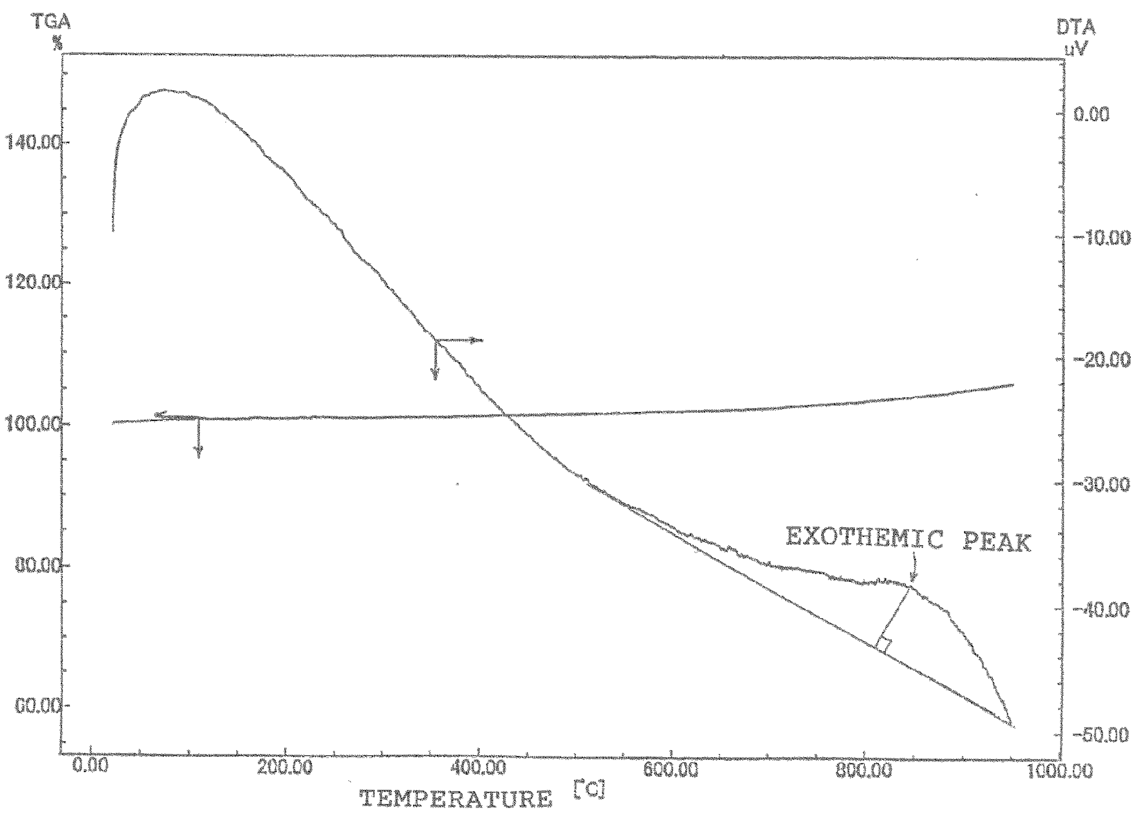
TGA
%
DTA
uV
140.00
120.00
100.00
80.00
60.00
0.00
-10.00
-20.00
-30.00
-40.00
-50.00
0.00
200.00
400.00
600.00
800.00
1000.00
TEMPERATURE [C]
EXOTHEMIC PEAK

Fig.12

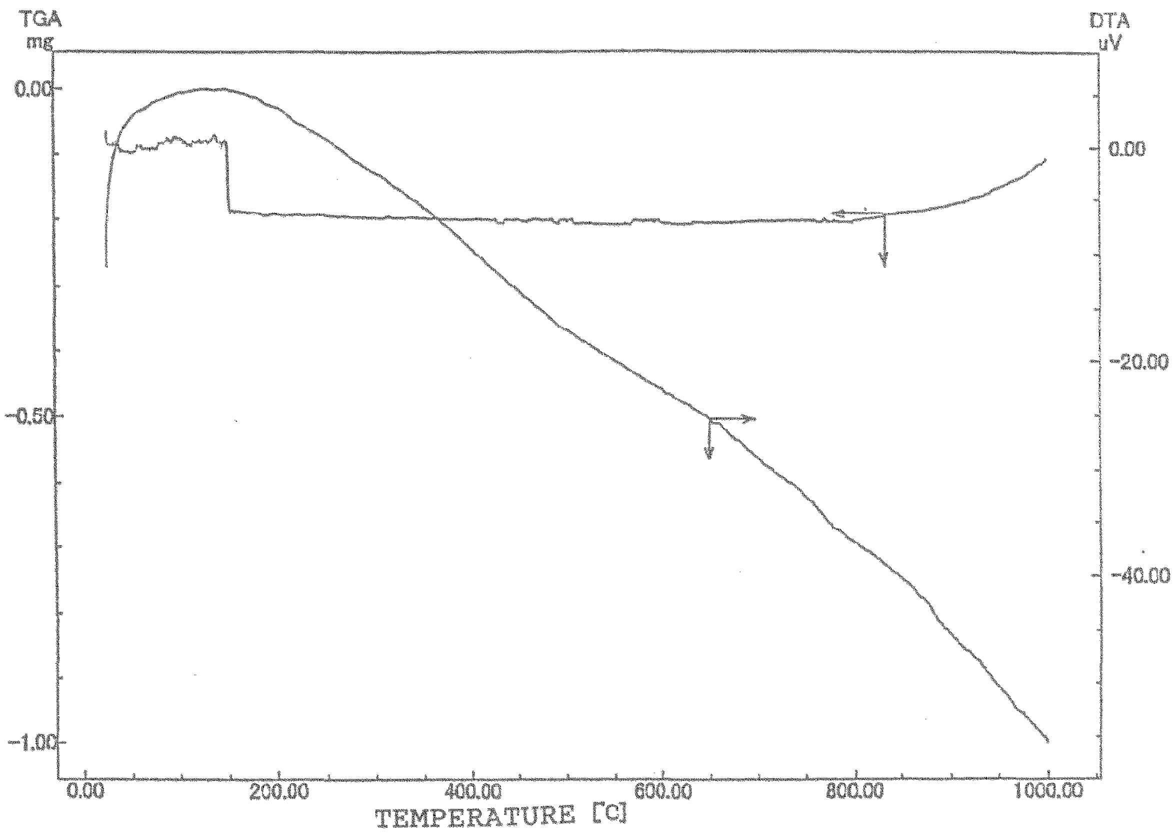
TGA
mg
DTA
uV
0.00
-0.50
-1.00
0.00
-20.00
-40.00
0.00
200.00
400.00
600.00
800.00
1000.00
TEMPERATURE [C]

Fig.13

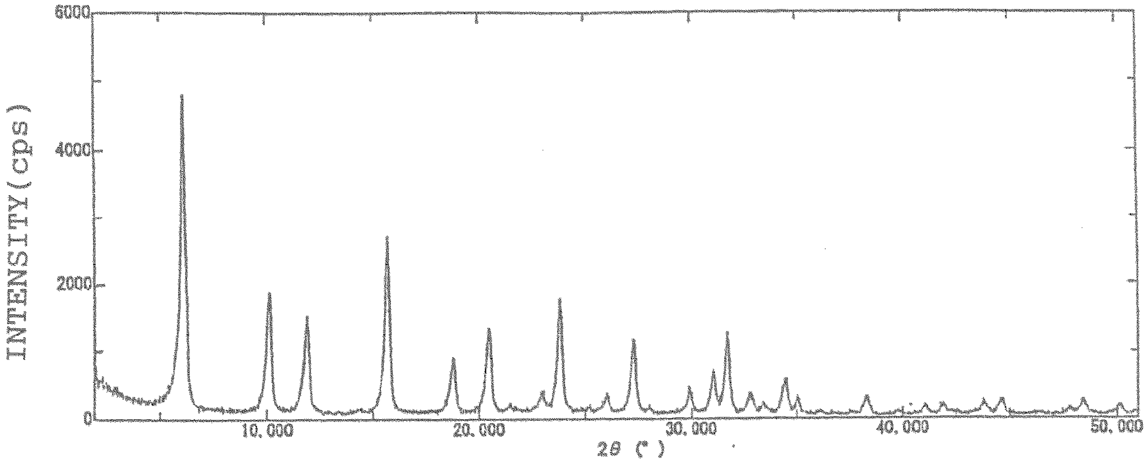
6000
4000
2000
0
INTENSITY(cps)
10.000
20.000
30.000
40.000
50.000
2θ (°)

Fig.14

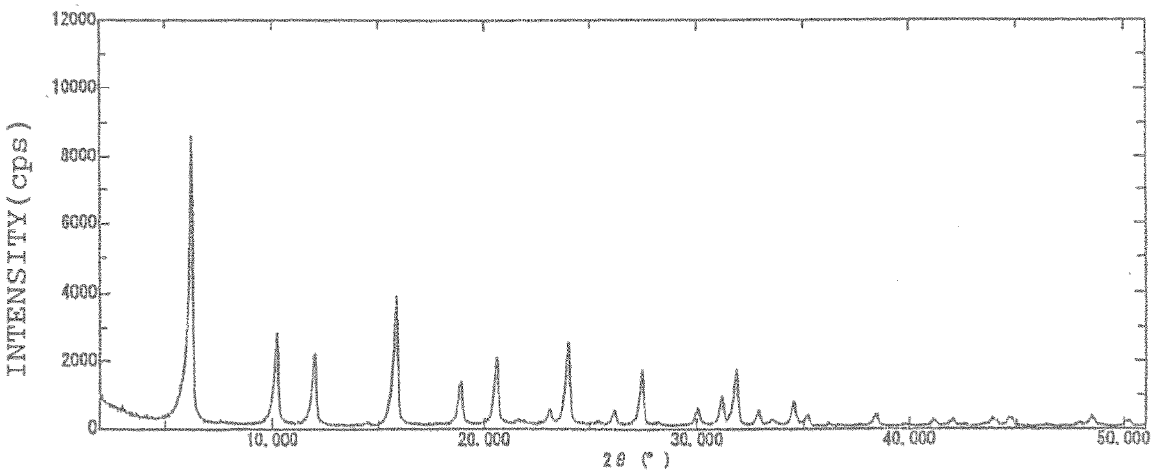
12000
10000
8000
6000
4000
2000
0
INTENSITY(cps)
10.000
20.000
30.000
40.000
50.000
2θ (°)

Fig.15

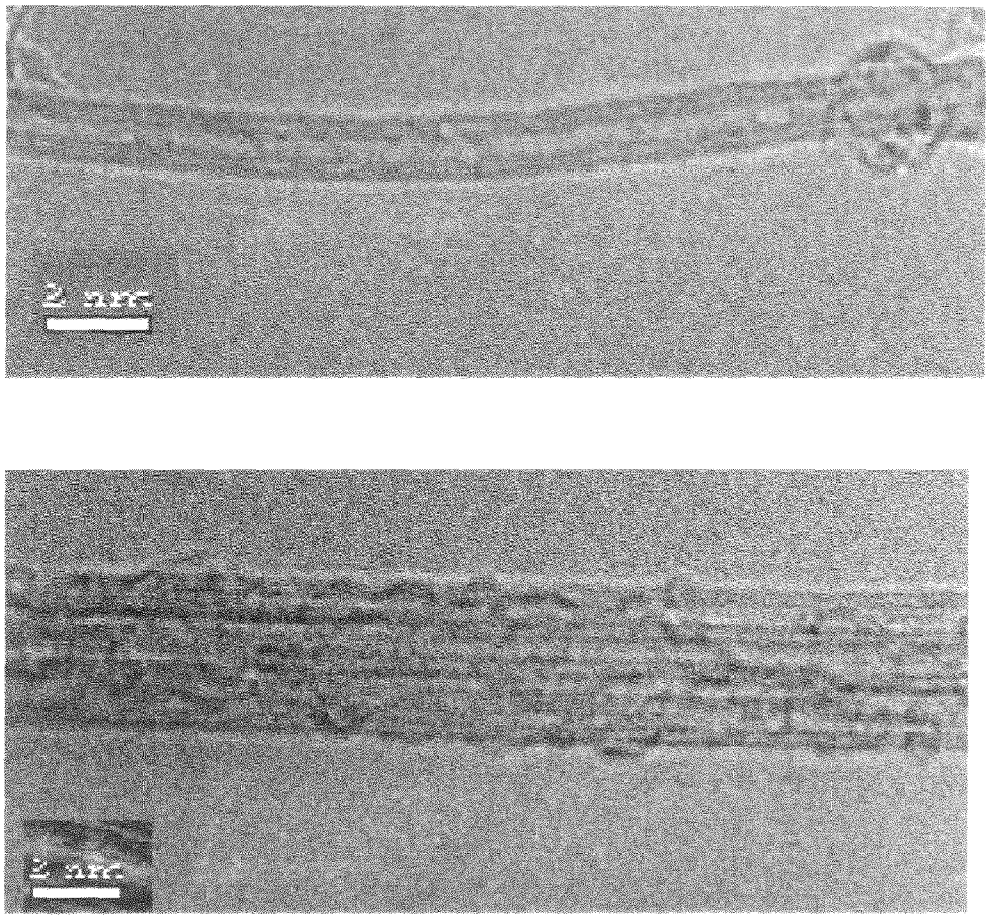

Fig.16

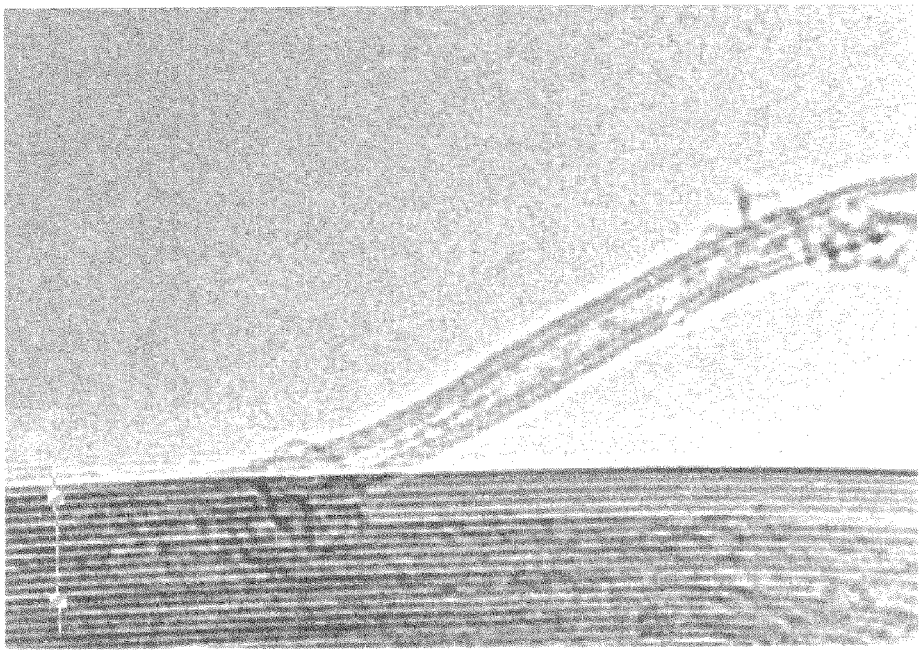

Fig.17

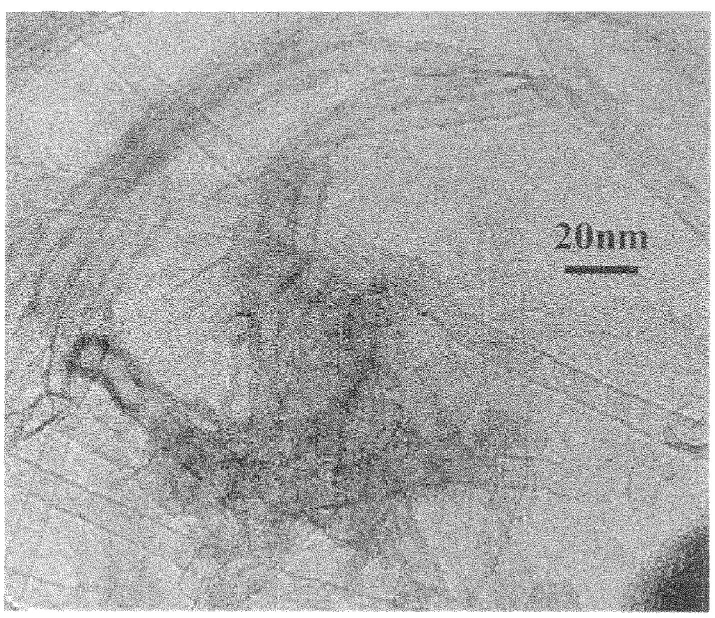

Fig.18

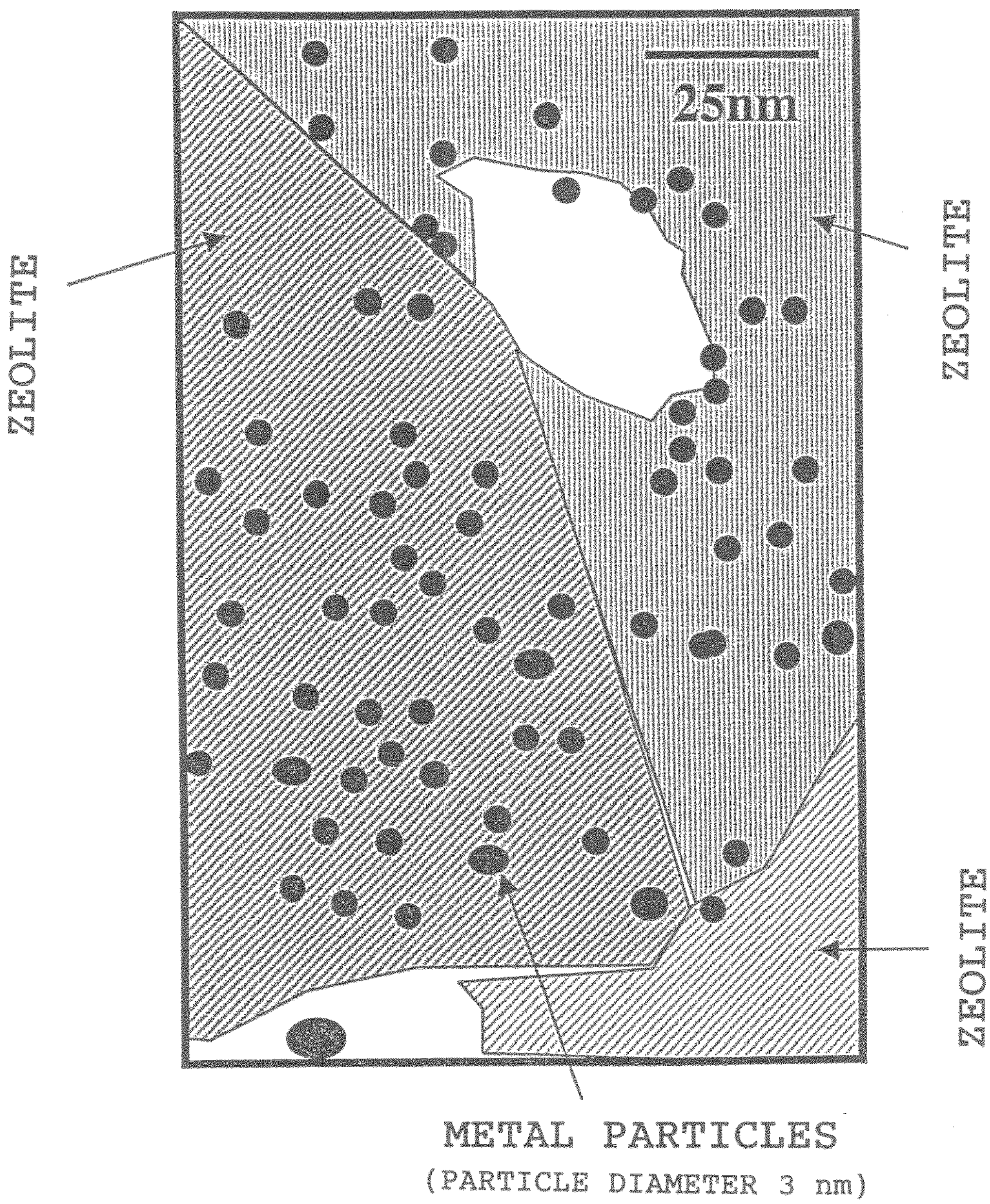
25nm
ZEOLITE
ZEOLITE
ZEOLITE
METAL PARTICLES
(PARTICLE DIAMETER 3 nm)

Fig.19

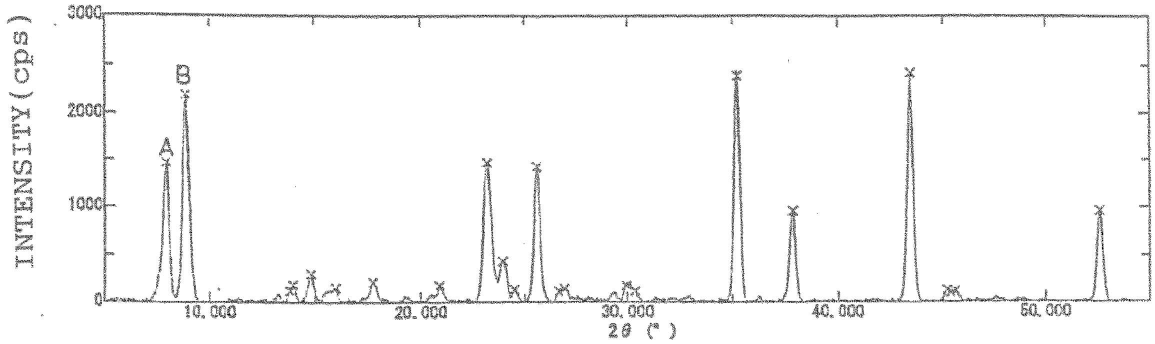
INTENSITY (cps)
3000
2000
1000
0
A
B
10.000
20.000
30.000
40.000
50.000
2θ (°)

Fig.20

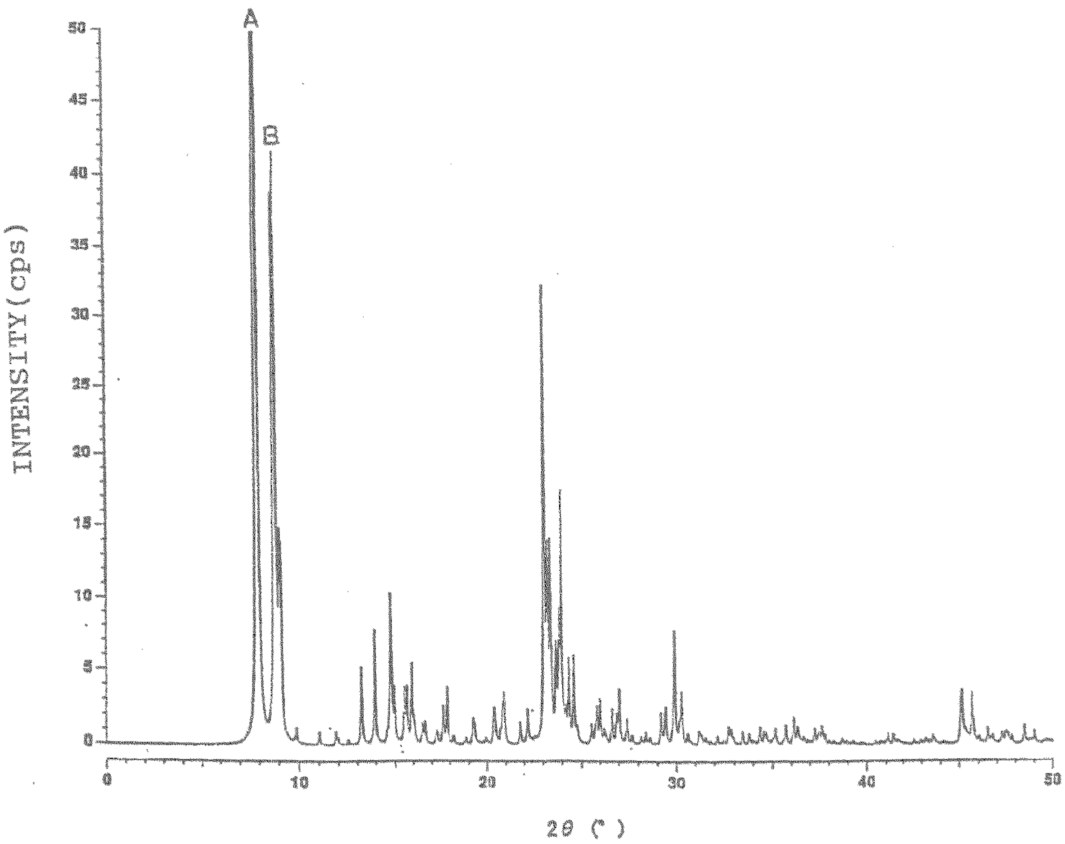
INTENSITY (cps)
50
45
40
35
30
25
20
15
10
5
0
A
B
0
10
20
30
40
50
2θ (°)

Fig.21

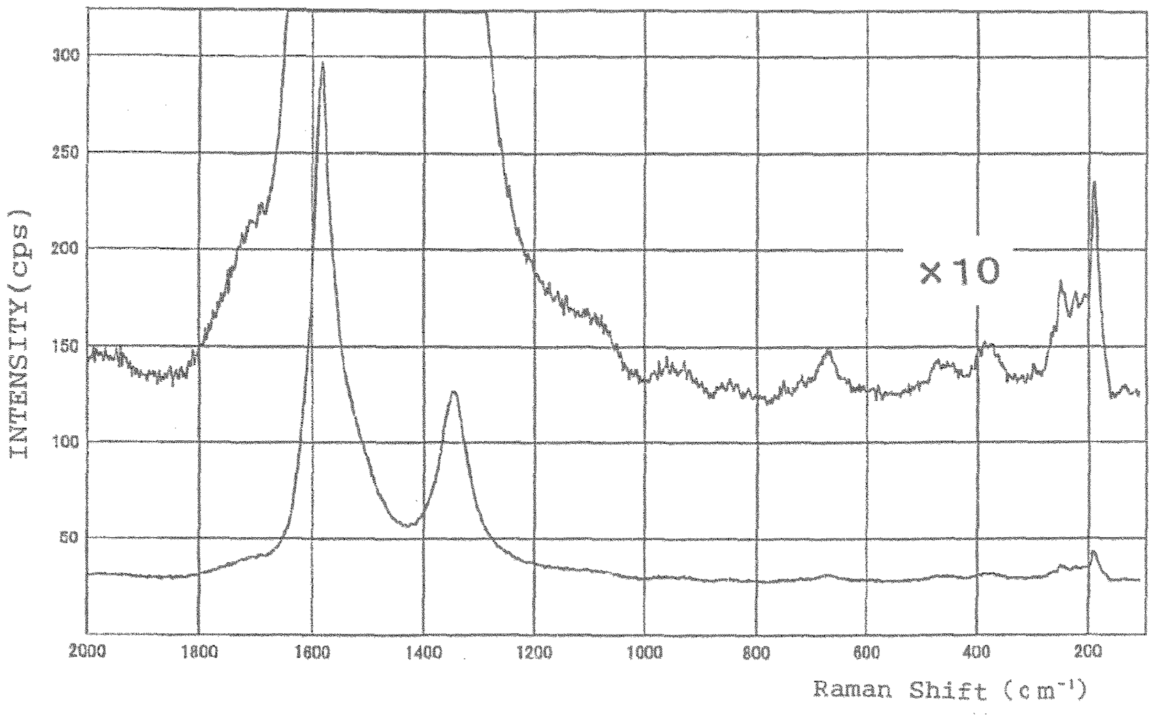
300
250
200
150
100
50
INTENSITY(cps)
×10
2000
1800
1600
1400
1200
1000
800
600
400
200
Raman Shift (cm⁻¹)

Fig.22

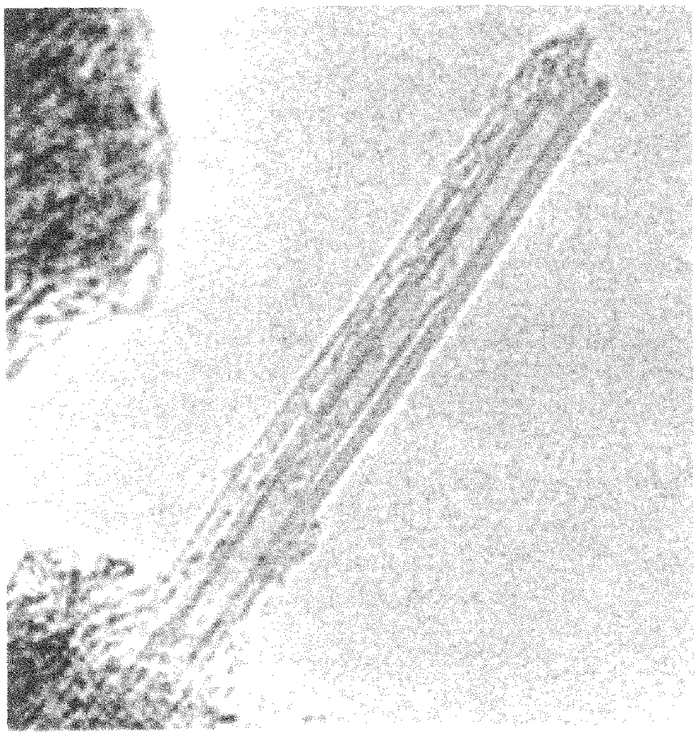

Fig.23

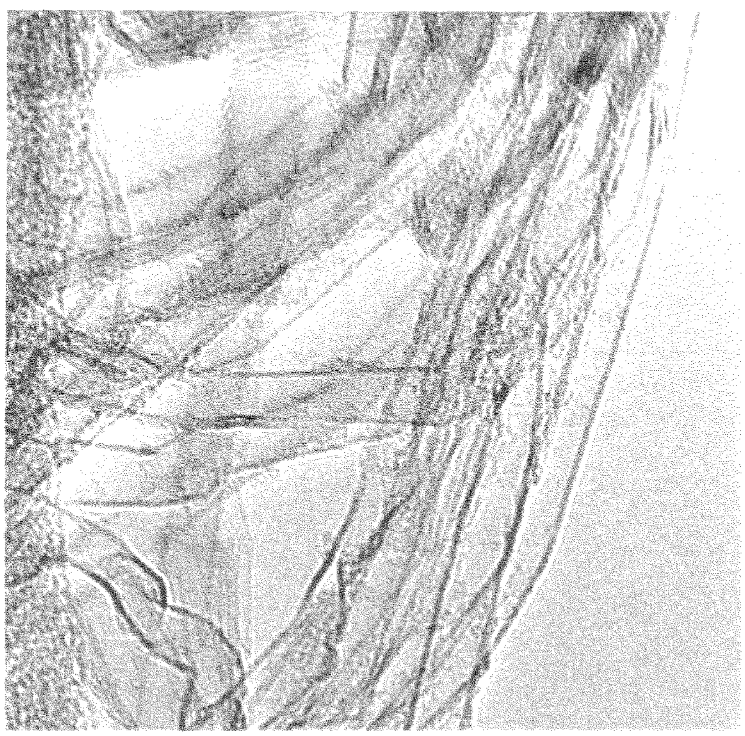

Fig. 24

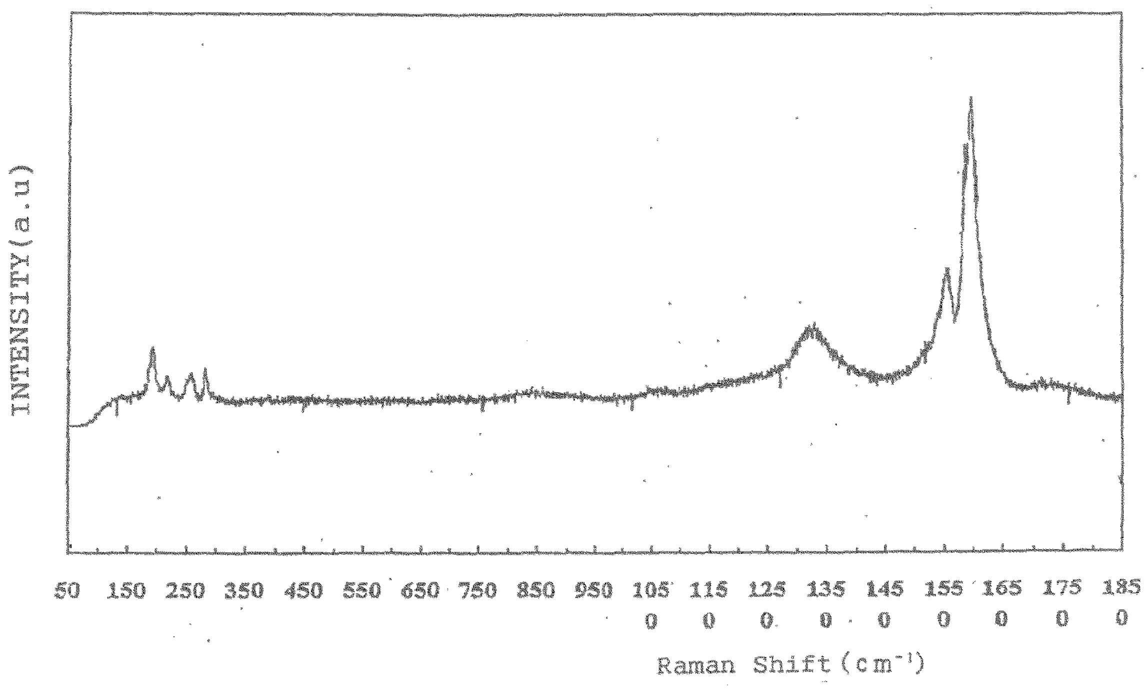
INTENSITY(a.u)
50
150
250
350
450
550
650
750
850
950
105
0
115
0
125
0
135
0
145
0
155
0
165
0
175
0
185
0
Raman Shift(cm⁻¹)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Chemical Physics Letters,* 1999, vol. 303, 117-124
- *Chemical Physics Letters,* 2000, vol. 317, 71-76
- *Journal of Physical Chemistry,* 1967, vol. 71, 4155
- **Skeel et al.** *Proceedings of 6-th International Zeolite Academic Conference,* 1984, 87
- **Kataura et al.** *Eur. Phys. J.B,* 2001, vol. 22 (3), 307-320